# EUROPEAN PATENT SPECIFICATION

(11) **EP 3 346 851 B1**
(45) Date of publication and mention of the grant of the patent: **17.08.2022**
(21) Application number: 16771011.0
(22) Date of filing: 09.09.2016
(51) Int. Cl.: A23L 3/3463, A01N 43/90, A23B 7/10, A23B 7/154, A01P 3/00, A01N 37/02, A01N 37/06, A01N 25/04, A01N 25/24

(54) **A NEW FUNGICIDAL COMPOSITION COMPRISING NATAMYCIN AND FATTY ACID SELECTED FROM PALMITIC ACID, OLEIC ACID AND LINOLEIC ACID, OR SALTS THEREOF**
FUNGIZIDE ZUSAMMENSETZUNG ENTHALTEND NATAMYCIN UND FETTSÄURE AUSGEWÄHLT AUS PALMITINSÄURE, ÖLSÄURE, UND LINOLSÄURE ODER IHRE SALTZE
COMPOSITION FONGICIDE CONTENANT DE NATAMYCINE ET D'ACIDES GRASS SELECIONEÉ ENTRE L'ACIDE PALMITIQUE, L'ACIDE OLÉIQUE ET L'ACIDE LINOLEIQUE OU LEURS SELS

(30) Priority: 09.09.2015 EP 15184512; 18.04.2016 US 201662324192 P
(43) Date of publication of application: 18.07.2018
(73) Proprietor: Arec Crop Protection B.V., 6708 PW Wageningen (NL)
(72) Inventor: STARK, Jacobus, 6708 PW Wageningen (NL); JANS, Christiaan Gerardus Johannes Maria, 6708 PW Wageningen (NL); VAN DER KRIEKEN, Wilhelmus Maria, 6708 PW Wageningen (NL)
(74) Representative: V.O.
(86) International application number: PCT/NL2016/050627
(87) International publication number: WO 2017/043972

(56) References cited:
- EP-A1- 0 513 922
- EP-A1- 2 443 934
- CN-A- 101 069 700
- CN-A- 101 161 097
- CN-A- 101 601 495
- CN-A- 102 293 745
- CN-A- 103 478 428
- US-A1- 2015 038 442
- SIYUN LIU ET AL: "Biological Control of Phytopathogenic Fungi by Fatty Acids", MYCOPATHOLOGIA, KLUWER ACADEMIC PUBLISHERS, DO, vol. 166, no. 2, 29 April 2008 (2008-04-29), pages 93-102, XP019612089, ISSN: 1573-0832
- CLELIA ALTIERI ET AL: "Inhibition of Aspergillus spp. and Penicillium spp. by fatty acids and their monoglycerides", J FOOD PROT., vol. 7, no. 5, 18 May 2007 (2007-05-18), pages 1206-1212, XP055312769,
- Y. M. T. WELSCHER ET AL: "Natamycin Blocks Fungal Growth by Binding Specifically to Ergosterol without Permeabilizing the Membrane", JOURNAL OF BIOLOGICAL CHEMISTRY, vol. 283, no. 10, 7 January 2008 (2008-01-07), pages 6393-6401, XP055312771, US ISSN: 0021-9258, DOI: 10.1074/jbc.M707821200
- Robert C Lannitelli ET AL: "Effect of Fatty Acids on Action of Polyene Antibiotics", ANTIMICROBIAL AGENTS AND CHEMOTHERAPY, 1 May 1980 (1980-05-01), pages 861-864, XP055222212, Retrieved from the Internet: URL:https://www.ncbi.nlm.nih.gov/pmc/artic les/PMC283888/pdf/aac00385-0105.pdf [retrieved on 2015-10-20]

## Description

The invention relates to compositions comprising natamycin and a fatty acid selected from palmitic acid, oleic acid and linoleic acid, or a salt thereof to control fungal diseases on plants and plant parts and to improve development and yield of plants.

Plants can be attacked by many different phytopathogenic fungi which causes tremendous losses in crops worldwide. Plant diseases can drastically reduce yield and quality of crops. Also in harvested fruit, nuts and vegetables there is a wide variety of mould species causing spoilage and quality loss. Estimates on direct crop losses that can be attributed to moulds are 25-30% of the world crop production. For individual crops losses can be much higher, especially in the intensive cropping systems and when weather conditions are favorable for mould development. Even complete harvests can be destroyed. Where in the developed world losses are mainly of importance from an economical point of view, the impact in developing countries is much bigger: it may lead to a shortage of basic food products such as rice, corn and bananas. Also with respect to the growing world population it is of ultimate importance to enhance the world food production by improving yield and preventing losses.

Moulds can also cause losses due to the production of mycotoxins. Mycotoxins are toxic / carcinogenic metabolites produced by certain filamentous fungi. Too high mycotoxin levels in a crop, when noticed, will result in downgrading or destroying of the product. However, it is questionable whether mycotoxins are always detected and whether sufficient measures are taken, especially in developing countries. It is estimated that during growth and storage about 25% of the crops are affected by mycotoxins, which is a severe concern with respect to human and animal health. Acute effects due to high amounts of mycotoxins present in food or feed are usually restricted to developing countries or to livestock. When present at low concentrations mycotoxins may cause chronic effects leading to e.g. cancer and are of concern for the long-term health of the population.

Examples of mycotoxins produced by plant pathogenic moulds and the agricultural crops in which they may occur are: (1) aflatoxins (e.g. in cereals such as maize and grains, nuts such as peanuts and pistachios, fruit and herbs) formed by e.g. *Aspergillus flavus* and *A. parasiticus;* (2) ochratoxin A (e.g. in cereals such as maize, grain and barley, coffee, cocoa, grapes and nuts) is excreted by e.g. A. *ochraceus* and *Penicillium verrucosum;* (3) patulin (mainly in apples, but also in other fruits, vegetables and cereals) is produced by certain species of *Penicillium, Aspergillus* and *Byssochlamys;* (4) deoxynivalenol also known as DON (mainly in cereals and grains such as wheat, barley, oats, rye, maize, sorghum and rice) is formed by e.g. *Fusarium graminearum* and *Fusarium culmorum.* Other examples of mycotoxins which may be present on crops are fuminosins, trichothecenes, zearalenone, citrinin and cyclopiazonic acid.

Mould growth also may result in loss of nutrients, formation of off flavors and destruction of tissue causing quality loss after processing. In many cases, mould infections occur in the field after which the mould develops during storage if the conditions are favorable resulting in post-harvest losses of e.g. grain, seed, flower bulbs, seed-potatoes, fruit and vegetables or moulding of processed foods such as breakfast cereals, juices or fruit cuts.

Plant pathogenic fungi in the soil, in the field (on agricultural plant parts such as seeds, bulbs and plants) and after harvesting ( e.g. on cereals, vegetables and fruits) are generally controlled by synthetic fungicides. However, many fungicides lost their activity over the years due to their repeated use which resulted in development of fungal resistance. This even occurred in case of new pesticides which had been on the market only for a short period of time. In addition, growing of monocultures (e.g. the banana Cavendish strain) resulted in a more rapid selection of resistant plant pathogenic mould strains. Development of resistance will always result in an increasing number of treatments and the application of higher amounts and/or more fungicides. Applying agrochemicals in too high concentrations or using cocktails of agrochemicals often results in phytotoxic effects effect on the crop itself.

Many fungicides currently on the market will disrupt natural ecosystems by causing harmful effects, e.g. by contaminating water sources or because of their undesirable effects on non-target organisms. Besides the environmental pollution, also human health problems especially with respect to workers safety is an important issue. In addition, high residue levels of harmful fungicides on agricultural products at the moment of consumption, even exceeding the maximum residue limits, is a serious point of concern. Consumers and governmental regulators have increasing concerns resulting in stricter regulation in for example the EU, the USA, Japan and in many other countries. More and more, synthetic agrochemicals have been banned and will be banned in the coming years. Of course, from an environmental and health point of view this is a positive development; on the other hand these measures generate problems with respect to combatting moulds in agriculture and thus for the world food supply.

To date, relatively few natural fungicides, the so called natural antimicrobials or bio(pesti)cides, are on the market. The commercial availability of biocides such as bacterial cultures, plant extracts or other compounds from a natural origin would help to decrease the negative impact of synthetic agrochemicals. However, in general it seems to be that the so called biocides are not effective enough and thus offer no real solution.

It can be concluded that in spite of the availability of many commercial fungicides and their extensive use, moulds still develop on almost all crops and harvested agricultural products. In addition, it can be concluded that in agriculture there is a high need for environmental friendly alternatives to replace the harmful synthetic fungicides which are being applied today.

For many decades the polyene macrolide antifungal natamycin has been used to prevent fungal growth on food products, mainly cheeses and dry fermented sausages. Natamycin was first described in 1957 and is produced by fermentation using a *Streptomyces* species, e.g. *Streptomyces natalensis.* Nowadays this natural antimicrobial is widely used throughout the world as a food additive.

Natamycin has a long history of safe use and, more important, up to now resistant moulds have never been found. Over the years quite some literature has been published describing the potential use of natamycin in many applications. However, despite of its wide activity against moulds, it can be observed that this almost never resulted in the commercial use in agriculture. This justifies the conclusion that the efficacy of natamycin in agriculture in real practice was not good enough.

The antifungal activity of fatty acids, monoglycerides and derivatives of fatty acids is generally known. Already in 1899, Clark described the antifungal properties of fatty acids (Clark, 1899. Botan Gaz 28: 289-327). More recent work in which the effect of certain fatty acids against the growth of plant pathogenic fungi has been examined comprises the study of Altieri et al. (Altieri et al., 2009. Int J Food Science Techn 44: 242-245), who described the antifungal activity of lauric acid, myristic acid and palmitic acid and their monoglycerides against *Fusarium* strains. A second example of more recent work is the study of Liu et al. (Liu et al., 2008. Mycopathologia 166: 93-102), who evaluated the antifungal activity of nine fatty acids against four pathogenic fungi. Sometimes promising results to control plant pathogens were reported. EP 2 443 934 A1 describes a fungicidal composition for coating food stuff containing less than 100 ppm natamycin and 250-30000 ppm of a sugar-fatty acid ester. EP 0 513 922 A1 describes a fungicidal composition containing natamycin, sorbic acid and Celynol^{®}, a sucrose ester of palm oil. CN 103 478 428 A describes a fungicidal agent for feed comprising natamycin and acids selected from butyric acid, benzoic acid and sorbic acid. CN 101 601 495 A describes a fungicidal composition containing natamycin, a sucrose fatty acid ester, glyceryl monocaprylate, calcium propionate, potassium sorbate and sodium dehydroacetate. CN 101 069 700 A describes a composition for prevention and treatment of mammalian vaginal fungal infection comprising natamycin and butyric acid producing bacteria. CN 101 161 097 A describes a composition comprising natamycin and butyric acid producing bacteria. However, the required concentrations were quite high and the results *in vivo* were not really convincing. The use of fatty acids as natural antimicrobial in crop protection is therefore not existing or very limited.

It can be concluded that there is a severe need for natural solutions for combatting moulds and reducing economic losses in agriculture.

The present invention relates to a new synergistic antifungal composition comprising natamycin and a fatty acid selected from palmitic acid, oleic acid and linoleic acid, or a salt thereof, wherein the natamycin has an average particle size of between 0.2 and 10 micrometer, and wherein all C4-C22 fatty acids or salts thereof in said composition are present at a concentration between 1 and 30 mol% of the natamycin concentration.

Surprisingly, it was found that when an agricultural crop (e.g. an ornamental plant, vegetable plant or tree), an agricultural plant part (e.g. a seed, flower, bulb, seed-potato, cereal, fruit, bean, nut, vegetable or flower) or a medium to be planted (e.g. a soil, growth substrate, mushroom growth substrate, artificial growth substrate, compost, water applied for watering in e.g. greenhouses or nutrient granule added to the soil) is treated with a composition of the invention, the crop or harvested product suffered less from mould infections. Surprisingly, a clear synergistic effect between natamycin and fatty acids, their monoglycerides and/or their derivatives was found.

Polyene fungicides have been reported to interact with the plasma membrane, especially with fungal membrane sterols. Although the mode of action of natamycin was reported to differ from that of other polyene fungicides, some reports also describe the interaction of natamycin with the main fungal sterol, ergosterol (te Welscher et al., 2008. J Biol Chem 283: 6393-6401), thereby modulating membrane fluidity and the function of membrane-bound enzymes. Without being bound by theory, a fatty acid that is present in a cell membrane may help to fluidize a membrane, resulting in enhanced interaction between natamycin and ergosterol.

The term "fatty acids", as is used herein, includes reference to fatty acids and to salts of fatty acids such as sodium, potassium and ammonium salts of fatty acids.

Fatty acids can be saturated or unsaturated (cis, trans), have a straight chain or not.

Exemplary C4-C22 fatty acids are: butyric acid (4:0), caproic acid (6:0), caprylic acid (8:0), capric acid (10:0), undecylenic acid (11:1), lauric acid (12:0), myristic acid (14:0), palmitic acid (C16:0), palmitoleic acid (16:1), stearic acid (C18:0), oleic acid (18:1 cis-9), elaidic acid (18:1 trans-9), linoleic acid (C18:2), linolenic acid (18:3), linolelaidic acid (18:2), and arachidonic acid (20:4).

With a composition of the invention several problems are solved: due to the synergistic effect of natamycin and fatty acids comprising palmitic acid, oleic acid, linoleic acid, or salts thereof, a better efficacy is achieved and less natamycin is required, This is of importance from an economic point of view. When combined in a cocktail with other natural or synthetic fungicides also less of these other fungicides are required resulting in cost reduction, a safer product, lower residues and less environmental pollution. Due to the fact that a better efficacy is obtained when a composition of the invention is used, the cost-in-use will be lower. From an economical point of view, natamycin is now far too expensive for most agricultural applications which is limiting the use of this environmental friendly biological antifungal in agriculture. With the present invention this problem is solved and the broad application in agriculture of a safe, effective and environmental friendly biological product against moulds will become reality.

Without being bound by theory, at least part of the synergistic effect that is observed between natamycin and fatty acids comprising palmitic acid, oleic acid and linoleic acid, or salts thereof may be due to an enhanced solubility of natamycin in an aqueous composition comprising fatty acids or salts thereof. In the absence of fatty acids or salts thereof, the solubility of natamycin is between 25 and 50 ppm, depending on the temperature. In the presence of fatty acids or salts thereof, the solubility of natamycin is increased at a pH between 5 and 9. The enhanced solubility was especially observed for purified natamycin, and was observed for different batches of different producers, including Shandong Freda Biotechnology Co., Ltd. (Jinan, China), Chihon Biotechnology Co., Ltd. (Luoyang, China), and Sigma-Aldrich (Munich, Germany).

A antifungal composition according to the invention comprises from 1% to 98% (w/w) of natamycin, preferably from 5% to 90% of natamycin, more preferably from 10% to 85% of natamycin, more preferably from 20% to 80% of natamycin, most preferably 6% to 60% (w/w) of natamycin.

An antifungal composition according to the invention preferably comprises between 3 and 10 mol% (w/w) of the fatty acid selected from palmitic acid, oleic acid and linoleic acid, or a salt thereof.

A preferred antifungal composition according to the invention comprises from 6% to 60% (w/w) of natamycin and 1 - 30 mol% of the at least one fatty acid selected from palmitic acid, oleic acid and linoleic acid, or a salt thereof.

An antifungal composition according to the invention preferably comprises at least two fatty acids selected from palmitic acid, oleic acid and linoleic acid, or salts thereof.

The pH of a composition of the invention preferably is between pH 5-9, more preferably between 6-8, such as about 7 or 7.5. If required, the pH of a composition of the invention may be adjusted with a base or an acid, as is known to a person skilled in the art.

A composition of the invention preferably is milled, for example using a bead mill such as Dynomill^{®}. The average particle size of natamycin is between 0.2 and 10 micrometer, preferably between 0.5 and 5 micrometer, more preferably between 0.5 and 2 micrometer. Methods for determining the average particle size of a composition according to the invention are known to the skilled person. For example, Hukkanen and Braatz, 2003. Sensors and Actuators B 96: 451-459, discuss varies methods that can be used for determining the average particle size of a composition, including forward light scattering and ultrasonic extinction. A preferred method is based on laser diffraction analysis, for example using a Analysette 22-MicroTec plus laser-particle-sizer (Fritsch, Idar-Oberstein, Germany).

A composition of the invention may include proteins as components of cellular matter from a natamycin-producing bacterium. Said natamycin in a composition according to the invention is preferably produced by fermenting biomass by a fermentation organism and the cellular matter that is present in the composition is from said natamycin-producing fermentation organism.

Said cellular matter may further include compounds that are remnants of natamycin-producing bacteria, or compounds excreted by the natamycin-producing bacteria. Examples of such compounds are compounds of the bacterial cell envelope, which includes the plasma membrane and the cell wall of a natamycin-producing bacterium. Such compounds include phospholipids such as phospholipids and glycolipids which, upon hydrolysis such as by addition of sodium hydroxide, result in fatty acids, such as C16-C18 fatty acids.

Further components of cellular matter from a natamyin-producing bacterium that may be present in a composition of the invention are, for example, peptidoglycans (poly-N-acetylglucosamine and N-acetylmuramic acid) or murein, teichoic acids (e.g., bacterial polysaccharides of glycerol phosphate or ribitol phosphate linked via phosphodiester bonds), glutamic acid, L, galactose, glucose, mannose, fructose, galactosamine, N-acetyl glucosamine, muramic acid, carbohydrates, ribitol, peptides, L-diaminopimelic acid, glycine, alanine, sterols, and/or proteins such as proteins involved in cell-cell contact, surface recognition, cytoskeleton contact, signaling, enzymatic activity or transporting substances across the membrane of the natamycin-producing bacteria.

Said further components may further include compounds present in the cytoplasm, plasmids, DNA, RNA, ribosomes, intracellular membranes, enzymes, nutrient storage structures, such as glycogen, lipid structures, protein structures and sugar structures.

It should be understood that any of the components of cellular matter, as described herein, may be combined as if each and every combination were individually listed. For example, the composition may include natamycin, fatty acids, proteins, glucose, and starch.

The fermentation medium and fermentation process as such described below are not part of the invention.

The fermentation broth may be produced by a suitable fermentation process using natamycin-producing bacteria. Such bacteria may include, for example, *Streptomyces natalensis* and *Streptomyces gilvosporeus.*

Any suitable medium for fermentation of a specific production strain can be applied. For example, the fermentation medium may contain sufficient feed sources and nutrients, such as metabolizable carbon and nitrogen sources, growth factors, inorganic elements and trace elements. The medium for fermentation may be prepared in water and may include a combination of one or more of the following compounds:
a nitrogen source such as yeast extract and/or non-yeast proteins, such as protein hydrolysates, peptones, soy proteins, beef extract;
a metabolizable carbon source such as glucose, molasses, lactose, polysaccharides, corn steep liquor, corn starch, and potato starch;
growth factors such as vitamins;
inorganic elements such as calcium, potassium, sodium, magnesium, ammonium sulphate; and/or
trace elements such ad zinc, copper, iron, boron and cobalt.

The fermentation medium may further include anti-foaming agents such as silicone defoamer to control foaming during the fermentation.

The fermentation may be carried out in any suitable fermentation vessel, using any suitable techniques or methods known in the art. For example, the fermentation medium may be brought to a suitable temperature, for example between 28°-35°C, inoculated with a production strain, and incubated for a sufficient period of time. The fermentation time may depend upon various factors, including the composition of the fermentation medium, the incubation temperature, the oxygen supply, the stirring equipment, the quality of the inoculum and the development of the fermentation. For example, the fermentation time may 60 to 170 hours.

During the fermentation oxygen and/or air is supplied to maintain a suitable level of dissolved oxygen in the fermentation medium during the main part of the fermentation, a feed source such as the carbon source is supplied at a sufficient rate and the pH may be controlled.

A natamycin composition can be recovered from the fermentation broth using different methods. For example, the fermentation broth, including the fermentation medium and cells of the production organism, is treated to eliminate at least a portion, or all, living cells of the production organism. Elimination of the cells of the production organism may also be executed after one or more processing steps such as processing steps required to concentrate the fermentation broth through any suitable method such as evaporation, filtration and centrifugation. To improve evaporation or filtration, the fermentation broth may be heated. For example, in one variation, the fermentation broth is heated to a temperature between 50-70 °C.

The disintegration of the biomass can be realized using any method known in the art. Other examples of such methods for lysis of the producing cells include, for example, the use of a heat treatment step that is carried out for a sufficient period of time at a sufficient temperature; a pH treatment by adding compounds to increase or decrease the pH to values resulting in an alkaline or acid incubation of the fermentation broth; the use of antimicrobial agents; using surface active agents such as cell wall degrading enzymes or chemical surfactants to damage the cell membrane of the production organism; the use of disruption technologies such as homogenization, ultrasonic treatment, electrostatic treatment, magnetic field, high shear mixing, etc.; an organic solvent such as methanol and/or ethanol,. and one or more of the methods described above can be applied to generate natamycin. The disintegration of the biomass may result in lysis and destruction of all cells of the production strain. In addition, disintegration may result in fragmentation of the cellular structures, especially the hyphae and in solubilisation of cell constituents. Various methods and techniques are known in the art to check the disintegration of cells of the production organism, e.g. by microscopy, measuring the viscosity of the biomass, or determining development of colonies on a suitable growth medium on an agar plate.

A preferred method of producing a natamycin composition comprises providing a fermentation broth comprising natamycin; filtering the fermentation broth to obtain a filtration cake, wherein the filtration cake comprises natamycin; treating the filtration cake with methanol or ethanol to disintegrate the biomass, dissolving at least a portion of the natamycin in the treated filtration cake, preferably by increasing the pH of the treated filtration cake, for example with aqueous sodium hydroxide, to produce a natamycin solution; extracting the natamycin solution with ethanol or methanol, preferably methanol; and precipitating at least a portion of natamycin from the natamycin solution by neutralizing the pH to obtain natamycin. In addition, salts such as CaCl₂ and NaCl may be added to improve the recovery process, while acetone and salts such as ammonium sulfate may be used for salting out the fermentation broth.

As is known to a skilled person, a composition comprising natamycin and a fatty acid selected from palmitic acid, oleic acid and linoleic acid, or a salt thereof may be obtained using methanol and/or ethanol for disintegration of the biomass, preferably methanol and/or as organic solvents, Repeated uses of ethanol, or use of organic solvents such as isopropanol, butanol and/or propanol results in a reduction of the amount of fatty acids that is present in the natamycin composition.

The dissolving of at least a portion of the natamycin in the treated filtration cake comprises increasing the pH of the treated filtration cake. In one variation, the pH is increased to about pH 10. Any suitable bases may be used to increase the pH. For example, a suitable base is sodium hydroxide (NaOH). When a base is used, then the precipitating of at least a portion of natamycin from the natamycin solution comprises adding an acid to obtain a pH of about 6-7. Such acid may include, for example, hydrochloric acid (HCl).

The dissolving of at least a portion of the natamycin in the treated filtration cake may, in addition or as an alternative, comprises reducing the pH of the treated filtration case. In one variation, the pH is reduced to about pH 3. Any suitable acids may be used to reduce the pH. For example, a suitable acid is hydrochloric acid (HCl). When an acid is used, then the precipitating of at least a portion of natamycin from the natamycin solution comprises adding a base to obtain a pH of about 6-7. Such base may include, for example, sodium hydroxide (NaOH).

A composition of the invention preferably is an aqueous or non-aqueous, preferably oily, concentrated stock composition which has to be diluted with a suitable diluent such as e.g. water or oil before use; or an aqueous or non-aqueous ready-to-use composition.

A composition of the invention may be used for soil treatment, to prepare a seed dressing, a seed coating, a coating emulsion (e.g. for fruit or plants in the field), a wax that is applied on fruit (e.g. pineapples, oranges or apples), an oil that is applied by spraying plants in the field (e.g. bananas). A composition of the invention also includes a concentrated dry composition such as e.g. a granulate, a powder and/or a tablet which can be used to prepare compositions for immersions, spraying or dipping agricultural products.

A composition of the invention preferably is a suspension concentrate (SC), a water dispersible granule (WG), a wettable powder (WP), a suspo emulsion (oily) (SE), oil dispersion (OD), a dispersion concentrate (DC), a dry powder seed treatment composition (DS), a water slurriable powder (WS), a flowable seed treatment composition (FS) or a water dispersible granule seed treatment composition (WG).

A "suspension concentrate" as used herein refers to a suspension of solid particles in a liquid intended for dilution with water prior to use.

A "dispersion concentrate" as used herein refers to a dispersion of solid particles in a liquid intended for dilution with water prior to use.

A "water dispersible granule" as used herein refers to a formulation in granule form which is dispersible in water forming a dispersion such as a suspension or solution.

A "wettable powder" as used herein refers to a powder formulation intended to be mixed with water or another liquid prior to use.

A "water slurriable powder" as used herein refers to a powder formulation that is made into a slurry in water prior to use.

A composition of the invention preferably comprises a polyelectrolyte complex of a polyanion and a polycation as described in the published international patent application WO2013/133706, or any other encapsulation technology known in the art, e.g. liposomes, lipid structures or empty cells of e.g. yeast in which the composition of the invention is encapsulated.

Said polyelectrolyte complex is a complex of oppositely charged polyelectrolytes (a polyanion and a polycation) which form strong electrostatic links. Said polyelectrolyte complex is an insoluble complex. This complex alone does not have antimicrobial efficacy. The polyelectrolyte complex has sticky properties and contains polar parts (charged) and apolar parts. The aromatic moieties in the complex may have affinity for antimicrobial compounds such as, for example, natamycin. In combination with the sticky character of the polyelectrolyte complex, the antimicrobial compound will be optimally deposited and adhered to the soil for use in agriculture, horticulture and mushroom cultivation.

The polyelectrolyte complex comprises a polyanion, such as a lignin-compound, xanthan gum, humate and alginate, and a polycation, such as chitosan and poly-allylamine, in a relative amount of between 1:2 and 60:1 (w/w), more preferred between 1:1 and 50:1, more preferred between 2:1 and 30:1, such as about 2:1, about 5: 1, about 10:1; about 15:1, about 20:1, about 25:1 and about 30:1 (w/w). The relative amounts of a polyanion, preferably a lignin compound, and a polycation, preferably a chitosan, in a polyelectrolyte complex is most preferred about 5:1 (w/w).

Preferred polyanions include xanthan gum, alginate, a lignin compound such as lignosulfonate, pectin, carrageenan, humic acid, fulvic acid, angico gum, gum Kondagogu, sodium alkyl naphtalene sulfonate, poly-γ-glutamic acid, maleic starch half-ester, carboxymethyl cellulose, chondroitin sulphate, dextran sulphate, hyaluronic acid, and a synthetic polyanion such as poly(acrylic acid), polyphosphoric acid and poly(L-lactide).

Preferred polycations include poly-L-lysine, epsilon-poly-L-lysine, poly-L-arginine, poly-allylamine, chitosan oligosaccharide and chitosan. Examples of polyelectrolyte complexes are: (1) complexes of a lignin compound (such as calciumlignosulphonate) and chitosan or polyallyamine; (2) complexes of potassium humate and chitosan or poly-allylamine.

The polyelectrolyte complex is preferably present in a composition of the invention in a concentration between 10 - 800 g/l, more preferably 50 - 500 and most preferably 75 -250 g/l of a composition of the invention.

A composition according to the invention preferably further comprises a polyelectrolyte complex comprises a polyanion selected from a lignin-compound, xanthan gum, humate and alginate, and a polycation selected from chitosan or poly-allylamine, in a relative amount of between 1:2 and 60:1 (w/w).

A composition of the invention may further comprise at least one additional compound selected from the group consisting a surfactant, a sticking agent, a biocide, a preservative, a stabilizer, an antioxidant, an anti-foam-forming agent, a thickening agent, an UV-protector and a spray oil.

The term surfactant, as used in this application, refers to an agent that lowers the surface tension of a liquid and that allows easier spreading and distribution of a suspension comprising natamycin.

Said at least one surfactant preferably comprises at least one anionic and/or at least one non-ionic surfactant. Said anionic surfactant is preferably selected from sodium lauryl sulphate, a styrene (meth)acrylic copolymer such Atlox MetasperseTM 500 L and/or Atlox MetasperseTM 550S (Croda Crop Care, Snaith Goole, UK), and the like,.and sulfosuccinate type of surfactants. A more preferred anionic surfactant is selected from ethoxylated tristyrylphenol salts such as, for example, ethoxylated tristyrylphenol sulphate, for example 2,4,6-Tris[1-(phenyl)ethyl]phenyl-omega-hydroxypoly(oxyethylene) sulphate (Soprophor^{®} 4D384), and ethoxylated tristyrylphenol phosphate, for example polyethylene glycol 2,4,6-tristyrylphenyl ether phosphate triethanolamine salt (Soprophor^{®} FL); sodiumdioctylsulphosuccinate, for example Geropon^{®} DOS; naphthalene sulphonate condensate, for example Morwet^{®} D425; and sodiumlaurylsulphate, for example HeliwetTM NLS90 (Mosselman s.a., B-7011 Ghlin, Belgium).

Said non-ionic surfactant is preferably selected from the Witconol^{®} line, the Emulpon^{®} line and the Berol^{®} line of Akzo Nobel; the Brij^{®} line, the Synperonic^{®} line and the Myrj^{®} of Croda; the Antarox^{®} line of Rhodia, the Serdox^{®} and Servidox^{®} lines of Elementis; poly(oxyethylene)x-sorbitane-monolaurate, polymethyl methacrylate-polyethylene glycol graft copolymer, and ethylene oxide/propylene oxide block copolymers. A preferred non-ionic surfactant is selected from poly(oxyethylene)x-sorbitane-monolaurate, for example TWEEN^{®} 60, 61 or 65, polymethyl methacrylate-polyethylene glycol graft copolymer, for example Atlox^{™} 4913, ethylene oxide/propylene oxide block copolymer, for example Synperonic^{™} PE/L61, ATLAS G-5000 and ATLAS G-5002L,

Said at least one surfactant preferably comprises at least two surfactants, at least three surfactants, at least four surfactants, at least five surfactants, such as, for example, six surfactants, seven surfactants, eight surfactants, nine surfactants, or ten surfactants.

A most preferred combination of at least two surfactants comprises Atlas^{™} G 5002-L (Croda Crop Care, Cowick Hall, DN14 9AA, UK) and MetaSperse^{™} 550 S (Croda Crop Care, Cowick Hall, DN14 9AA, UK).

Said at least two surfactants preferably further comprise at least one wetting agent and at least one dispersing agent. A preferred dispersing agent is a naphthalene sulphonate condensate, for example sodium alkylnaphthalenesulfonate, formaldehyde condensate (Morwet^{®} D425). A preferred wetting agent is selected from the groups of the phosphated di- or tristyrenephenol ethoxylates in the phosphate form and/or of lignin sulphonates. A more preferred wetting agent is ethoxylated tristyrenephenol phosphate, such as, for example, Soprophor^{®} FL.

Said at least one surfactant, preferably at least two surfactants, is preferably present in a composition according to the invention at a concentration of between 10 and 10⁵ ppm, more preferred between 100 and 10⁴ ppm, more preferred between 500 and 5000 ppm for each surfactant.

A sticking agent is preferably selected from latex based products like PROLONG^{®} (Holland Fyto B.V., The Netherlands) and BOND^{®} (Loveland Industries Ltd), pinolene/terpene based products like NU-FILM^{®} (Hygrotech Saad) and SPRAY-FAST^{®} (Mandops), long chain polysaccharides like gellan gum, guar gum, succinoglycan gum (RHEOZAN^{®}; Rhodia) and xanthan gum, or a hydrated magnesium-aluminum silicate, for example attapulgite, (Attagel^{®}; BASF). Alternatively, the sticking agent may be a polymer or co-polymer from a type of polymer such as polyacrylate and polyethylene e.g. NEOCRYL^{®} (DSM, The Netherlands). A composition of the invention may also comprise two or more different sticking agents.

A sticking agent is preferably present in an amount of between 0 and 10⁵ ppm, more preferred between 100 and 10⁴ ppm, more preferred between 500 and 5000 ppm.

A preferred biocide, besides natamycin, in a composition according to the invention includes an antimicrobial compound such as an antifungal, an antibacterial, an insecticide and/or an acaricide. A composition of the invention may also comprise two or more additional biocides, such as two or more antimicrobial compounds, two or more herbicides, two or more insecticides, two or more acaricides, two or more bactericides, or combinations of, for example, at least one antimicrobial compound and at least one insecticide, at least one antimicrobial compound and at least one herbicide, at least one antimicrobial compound and at least one acaricide, at least one antimicrobial compound and at least one bactericide, at least one herbicide and at least one insecticide, at least one herbicide and at least one acaricide, at least one herbicide and at least one bactericide, at least one insecticide and at least one acaricide, at least one insecticide and at least one bactericide, and at least one acaricide and at least one agent to eliminate mites. Some biocides have a wide range of target organisms, as is known to the skilled person, and are therefore be included in more than one subgroup of biocides.

A preferred antimicrobial compound is an antifungal compound. Examples of additional antifungal compounds are pyrimethanil, fludioxonil, imazalil, thiabendazole, sodium ortho-phenylphenate, pyrimethanil, pyraclostrobin, boscalid, carbendazim,, 2-phenylphenol; 8-hydroxyquinoline sulphate; acibenzolar-5-methyl; actinovate; aldimorph; amidoflumet; ampropylfos; ampropylfos-potassium; andoprim; anilazine; azoxystrobin; benalaxyl; benodanil; benomyl (methyl 1-(butylcarbamoyl)benzimidazol-2-ylcarbamate); benthiavalicarb-isopropyl; benzamacril; benzamacril-isobutyl; bilanafos; binapacryl; biphenyl; blasticidin-S; boscalid; bupirimate; buthiobate; butylamine; calcium polysulphide; capsimycin; captafol; captan (N-(trichloromethylthio)cyclohex-4-ene-1,2-dicarboximide); carbendazim; carboxin; carpropamid; carvone; chinomethionat; chlobenthiazone; chlorfenazole; chloroneb; chlorothalonil; chlozolinate; cis-1-(4-chlorophenyl)-2-(1H-1,2,4-triazol-1-yl)-cycloheptanol; clozylacon; a conazole fungicide such as, for example, (RS)-1-(β-allyloxy-2,4-dichlorophenethyl)imidazole (imazalil; Janssen Pharmaceutica NV, Belgium) and N-propyl-N-[2-(2,4,6-trichlorophenoxy)ethyl] imidazole-1-carboxamide (prochloraz); cyazofamid; cyflufenamid; cymoxanil; cyprodinil; cyprofuram; Dagger G; debacarb; dichlofluanid; dichlone; dichlorophen; diclocymet; diclomezine; dicloran; diethofencarb; diflumetorim; dimethirimol; dimethomorph; dimoxystrobin; dinocap; diphenylamine; dipyrithione; ditalimfos; dithianon; dodine; drazoxolon; edifenphos; ethaboxam; ethirimol; etridiazole; famoxadone; fenamidone; fenapanil; fenfuram; fenhexamid; fenitropan; fenoxanil; fenpiclonil; fenpropidin; fenpropimorph; ferbam; fluazinam (3-chloro-N-(3-chloro-5-trifluoromethyl-2-pyridyl)-α,α,α-trifluoro-2,6-dinitro-p-toluidine); flubenzimine; fludioxonil; flumetover; flumorph; fluoromide; fluoxastrobin; flurprimidol; flusulfamide; flutolanil; folpet (N-(trichloromethylthio)phthalimide); fosetyl-A1; fosetyl-sodium; fuberidazole; furalaxyl; furametpyr; furcarbanil; furmecyclox; guazatine; hexachlorobenzene; hymexazol; iminoctadine triacetate; iminoctadine tris(albesilate); iodocarb; iprobenfos; iprodione; iprovalicarb; irumamycin; isoprothiolane; isovaledione; kresoxim-methyl; mancozeb; maneb; meferimzone; mepanipyrim; mepronil; metalaxyl; metalaxyl-M; methasulfocarb; methfiroxam; methyl 1-(2,3-dihydro-2,2-dimethyl-1H-inden-1-yl)-1H-imidazole-5-carboxylate; methyl 2-[[[cyclopropyl[(4-methoxyphenyl)imino]methyl]thio]-methyl]-.alph- a.-(methoxymethylene)benzeneacetate; methyl 2-[2-[3-(4-chlorophenyl)-1-methyl-allylideneaminooxymethyl]phenyl]-3-meth- oxyacrylate; metiram; metominostrobin; metrafenone; metsulfovax; mildiomycin; monopotassium carbonate; myclozolin; N-(3-ethyl-3,5,5-trimethylcyclohexyl)-3-formylamino-2-hydroxybenzamide; N-(6-methoxy-3-pyridinyl)cyclopropanecarboxamide; N-butyl-8-(1,1-dimethylethyl)-1-oxaspiro[4.5]decan-3-amine, nitrothal-isopropyl; noviflumuron; ofurace; orysastrobin; oxadixyl; oxolinic acid; oxycarboxin; oxyfenthiin; pencycuron; penthiopyrad; phosdiphen; phthalide; picobenzamid; picoxystrobin; piperalin; polyoxins; polyoxorim; procymidone; propamocarb; propanosine-sodium; propineb; proquinazid; pyraclostrobin; pyrazophos; pyrimethanil; pyroquilon; pyroxyfur; pyrrolnitrine, quinconazole; quinoxyfen; quintozene; silthiofam; sodium tetrathiocarbonate; spiroxamine; sulphur; tecloftalam; tecnazene; tetcyclacis; thiazole fungicide such as, for example, 2-(thiazol-4-yl)benzimidazole (thiabendazole; e.g. the commercial product TECTO^{®} Flowable SC of Syngenta, USA), thicyofen; thifluzamide; thiophanate-methyl; thiram; tiadinil; tioxymid; tolclofos-methyl; tolylfluanid; triazbutil; triazoxide; tricyclamide; tricyclazole; tridemorph; trifloxystrobin; validamycin A; vinclozolin; zineb; ziram; zoxamide; (2S)- N-[2-[4-[[3-(4-chlorophenyl)-2-propynyl]oxy]-3-methoxyphenyl]ethyl]-3-met- hyl-2-[(methylsulphonyl)amino]butanamide; 1-(1-naphthalenyl)-1H-pyrrole-2,5-dione; 2,3,5,6-tetrachloro-4-(methylsulphonyl)pyridine; 2,4-dihydro-5-methoxy-2-methyl-4-[[[[1-[3-(trifluoromethyl)phenyl]-ethyli- dene] amino]oxy]methyl]phenyl]-3H-1,2,3-triazol-3-one; 2-amino-4-methyl-N-phenyl-5-thiazolecarboxamide; 2-chloro-N-(2,3-dihydro-1,1,3-trimethyl-1H-inden-4-yl)-3-pyridinecarboxam- ide; 3,4,5-trichloro-2,6-pyridinedicarbonitrile; 3-[(3-bromo-6-fluoro-2-methyl-1H-indol-1-yl)sulphonyl]-N,N-dimethyl-1H-1,- 2,4-triazole-1-sulphonamide; and copper salts such as Bordeaux mixture (CuSO4.3Cu(OH)2.3CaSO4); copper hydroxide; copper naphthenate; copper oxychloride ((CuCl2 • 3Cu(OH)2), tribasic copper sulphate (CuSO4.3Cu(OH)2); cufraneb; cuprous oxide; mancopper; oxine-copper

An additional biocide according to the invention can also be a natural biocide. The term natural biocide comprises micro-organisms and viruses, feromones, extracts from plants and/or animals, and other substances such as, for example, minerals. Preferred plant extracts are or comprise Sage extract (= extract of *Salvia officinalis*), extract of *Reynoutria sachalinensis* (Giant Knotweed), extract of *Verticillium albo-atrum,* extract of Bacillus thuringiensis subsp. Kurstaki, extract of *Lecanicillium muscarium,* laminarin, lactoperoxidase, azadirachtin, harpin, chitosan, Pythium extract (and other fungal extracts).

Besides natamycin and C4-C22 fatty acids, monoglycerides and/or derivatives thereof, a composition of the invention may comprise one or more other fungicides, such as, for example, copper hydroxide, a strobilurin type of fungicides such as azoxystrobin, and phosphite, a triazole type of fungicides like cyproconazole, a succinate dehydrogenase inhibitor type of fungicides such as boscalid, a pthalimide / pthalonitrile type of fungicides such as chlorothalonil, folpet and captan, a benzimidazole type of fungicides such as thiabendazole, a carbamate type of fungicides such as propamocarb, a carboxamide type of fungicides such as fenoxanil, a dicarboxamide type of fungicides such as iprodione, a dithiocarbamate type of fungicides such as Mancozeb, an inorganic type of fungicides such as copperhydroxide, a morpholine type of fungicides such as dimethamorph, an organophosphate type of fungicides such as fosetyl, an azole type of fungicides such as prothioconazole, a phenylamide type of fungicides like metalaxyl, and fungicides not belonging to a specific group of fungicides like fludioxynil.

A preferred phosphite is a phosphite salt such as KH₂PO₃, K₂HPO³, NaH₂PO₃, Na₂HPO₃, (NH₄)₂HPO₃, (NH₄)H₂PO₃, ethyl hydrogen phosphonate, phosphorous acid, and mixtures of these compounds. A mixture of KH₂PO₃ and K₂HPO₃ is suitably obtained by adding KOH or K₂CO₃ to a KH₂PO₃ composition at a final pH of 5-9.

A further preferred additional biocide is an insecticide and/or acaricide. Preferred insecticides include imidacloprid (commercial product: ADMIRE^{®}, Bayer) Bacillus thuringiensis (commercial product: TUREX^{®}, Certis USA), teflubenzuron (commercial product: NOMOLT ^{®}, BASF), pymetrozine (commercial product: PLENUM^{®}, Syngenta) and acetamiprid (Commercial product: GAZELLE^{®}, Certis Europe), ACTELLIC^{®} Syngenta, Switserland), Pyrethroids (commercial product BAYGON^{®} (Bayer), bifenazate (e.g. Uniroyal), dichlorvos (e.g. Amvac Chemical Corporation), imidacloprid (e.g. Bayer), fenamiphos (e.g. Mobay Chemical Corporation), rosemary oil, oxamyl (e.g. Dupont) and sulfur-based insecticides. A most preferred insecticide is pirimiphos-methyl (commercial product ACTELLIC^{®}, Syngenta, Switserland). A composition of the invention may also comprise two or more insecticides.

Preferred acaricides include chlofentezine (commercial product: APOLLO^{®}, Makhteshim), acequinocyl (commercial product: KAMEMYTE^{®}, Arysta), spirodiclofen (commercial product: ENVIDOR^{®}, Bayer CropScience), bifenazate (commercial product: FLORAMITE^{®}, Certis Europe) and fenbutatinoxide (commercial product: TORQUE L^{®}, BASF). A most preferred acaricide is spirodiclofen. A composition of the invention may also comprise two or more acaricides.

A further preferred insecticide/acaricide is a carbamate, for example alanycarb, aldicarb, aldoxycarb, allyxycarb, aminocarb, bendiocarb, benfuracarb, bufencarb, butacarb, butocarboxim, butoxycarboxim, carbaryl, carbofuran, carbosulfan, cloethocarb, dimetilan, ethiofencarb, fenobucarb, fenothiocarb, formetanate, furathiocarb, isoprocarb, metam-sodium, methiocarb, methomyl, metolcarb, oxamyl, pirimicarb, promecarb, propoxur, thiodicarb, thiofanox, trimethacarb, XMC, xylylcarb, triazamate; an organophosphate, for example acephate, azamethiphos, azinphos (-methyl, -ethyl), bromophos-ethyl, bromfenvinfos (-methyl), butathiofos, cadusafos, carbophenothion, chlorethoxyfos, chlorfenvinphos, chlormephos, chlorpyrifos (-methyl/-ethyl), coumaphos, cyanofenphos, cyanophos, chlorfenvinphos, demeton-5-methyl, demeton-5-methylsulphon, dialifos, diazinon, dichlofenthion, dicrotophos, dimethoate, dimethylvinphos, dioxabenzofos, disulfoton, EPN, ethion, ethoprophos, etrimfos, famphur, fenamiphos, fenitrothion, fensulfothion, fenthion, flupyrazofos, fonofos, formothion, fosmethilan, fosthiazate, heptenophos, iodofenphos, iprobenfos, isazofos, isofenphos, isopropyl O-salicylate, isoxathion, malathion, mecarbam, methacrifos, methamidophos, methidathion, mevinphos, monocrotophos, naled, omethoate, oxydemeton-methyl, parathion (-methyl/-ethyl), phenthoate, phorate, phosalone, phosmet, phosphamidon, phosphocarb, phoxim, pirimiphos (-methyl/- ethyl), profenofos, propaphos, propetamphos, prothiofos, prothoate, pyraclofos, pyridaphenthion, pyridathion, quinalphos, sebufos, sulfotep, sulprofos, tebupirimfos, temephos, terbufos, tetrachlorvinphos, thiometon, triazophos, triclorfon, vamidothion; a sodium channel modulator/voltage-dependent sodium channel blocker, such as a pyrethroid, for example acrinathrin, allethrin (d-cis-trans, d-trans), beta-cyfluthrin, bifenthrin, bioallethrin, bioallethrin-S cyclopentyl isomer, bioethanomethrin, biopermethrin, bioresmethrin, chlovaporthrin, cis-cypermethrin, cis-resmethrin, cis-permethrin, clocythrin, cycloprothrin, cyfluthrin, cyhalothrin, cypermethrin (alpha-, beta-, theta-, zeta-), cyphenothrin, deltamethrin, empenthrin (IR isomer), esfenvalerate, etofenprox, fenfluthrin, fenpropathrin, fenpyrithrin, fenvalerate, flubrocythrinate, flucythrinate, flufenprox, flumethrin, fluvalinate, flibfenprox, gamma-cyhalothrin, imiprothrin, kadethrin, lambda-cyhalothrin, metofluthrin, permethrin (cis-, trans-), phenothrin (IR trans-isomer), prallethrin, profluthrin, protrifenbute, pyresmethrin, resmethrin, RU 15525, silafluofen, tau-fluvalinate, tefluthrin, terallethrin, tetramethrin (IR isomer), tralomethrin, transfluthrin, ZXI 8901; an oxadiazine, for example indoxacarb; an acetylcholine receptor agonists/antagonists; a chloronicotinyl, for example clothianidin, dinotefuran, imidacloprid, nitenpyram, nithiazine, thiacloprid, thiamethoxam; a nicotine such as bensultap, cartap; an organochlorine, for example camphechlor, chlordane, endosulfan, gamma-HCH, HCH, heptachlor, lindane, methoxychlor, a fiproles, for example acetoprole, ethiprole, fipronil, pyrafluprole, pyriprole, vaniliprole; a mectin, for example avermectin, emamectin, emamectin-benzoate, ivermectin, milbemycin; a juvenile hormone mimetics, for example diofenolan, epofenonane, fenoxycarb, hydroprene, kinoprene, methoprene, pyriproxifen, triprene; an ecdyson agonists/disruptors such as a diacylhydrazines, for example chromafenozide, halofenozide, methoxyfenozide, tebufenozide; benzoylureas, for example bistrifluoron, chlofluazuron, diflubenzuron, fluazuron, flucycloxuron, flufenoxuron, hexaflumuron, lufenuron, novaluron, noviflumuron, penfluoron, teflubenzuron, triflumuron an organotin, for example azocyclotin, cyhexatin, fenbutatin-oxide; a pyrrole, for example chlorfenapyr; a dinitrophenol, for example binapacyrl, dinobuton, dinocap, a tetronic acid, for example spirodiclofen, spiromesifen; a tetramic acid, for example spirotetramat and 3-(2,5-dimethylphenyl)-8-methoxy-2-oxo-1-azaspiro[4.5]dec-3-en-4-yl ethyl carbonate; a carboxamide, for example flonicamid; a benzoic acid dicarboxamide, for example flubendiamide; azadirachtin, a fumigant, for example aluminium phosphide, methyl bromide, sulphuryl fluoride; an antifeedant, for example cryolite, flonicamid, pymetrozine; a mite growth inhibitor, for example clofentezine, etoxazole, hexythiazox; amidoflumet, benclothiaz, benzoximate, bifenazate, bromopropylate, buprofezin, quinomethionate, chlordimeform, chlorobenzilate, chloropicrin, clothiazoben, cycloprene, cyflumetofen, dicyclanil, fenoxacrim, fentrifanil, flubenzimine, flufenerim, flutenzin, gossyplure, hydramethylnone, japonilure, metoxadiazone, petroleum, piperonyl butoxide, potassium oleate, pyridalyl, sulfluramid, tetradifon, tetrasul, triarathene, and/or verbutin.

A further preferred additional biocide is a bactericide, for example bronopol, dichlorophen, nitrapyrin, nickel dimethyldithiocarbamate, kasugamycin, octhilinon, furancarboxylic acid, oxytetracyclin, probenazole, streptomycin, tecloftalam, and copper salts. Preferred bactericides include compounds such as copper salts (e.g. copper hydroxide, copper oxychloride, copper sulfate and Bordeaux mixture), sophorolipid which is a glycolipid that is produced by yeasts such as Candida bombicola, Candida apicola, and Wickerhamiella domercqiae and is composed of a dimeric sugar linked with a glycosidic bond to a hydroxyl fatty acid, streptomycin, the commercial product CITRICIDAL^{®} (Bio/Chem Research) and validamycin. A most preferred bactericide is copper hydroxide. A composition of the invention may also comprise two or more bactericides.

Some of the indicated compounds have more than one activity. For example, copper salts (e.g. copper hydroxide) have bactericide and fungicide activities. The activities of the individual compounds are known to the skilled person. In addition, handbooks and websites (e.g. www.frac.info/frac) are available to determine the activity or activities of a compound.

A composition according to the invention preferably further comprises at least one additional compound selected from the group consisting of a preservative, a stabilizer, an antioxidant, an anti-foam-forming agent, a thickening agent, an UV-protector and a spray oil.

Said preservative is preferably selected from weak acid preservatives such as sorbic acid, lactic acid, benzoic acid, propionic acid, citric acid, acetic acid, or an alkali metal or alkali earth metal salt thereof; inorganic acids such as hydrochloric acid; a dehydration salt such as sodium chloride, imidazoles such as imazalil or any antifungal compound known in the art as a preservative for food products, crop protection or after harvest treatment of fruits, vegetables or cereals; ethyl parabenzoate; borax; calcium bisulfite; calcium disodium EDTA; dehydroacetic acid; isothiazoles (e.g. KATHON^{®} (Rohm and Haas); a quaternary ammonium salt such as, for example, 1-(3-chloroallyl)-3,5,7-triaza-1-azoniaadamantane chloride (CTAC), and antimicrobials capable of preventing bacterial growth in the composition. A preferred preservative is a quaternary ammonium salt, preferably CTAC stabilized with sodium bicarbonate (Dowicil^{®}75). A further preferred preservative is Kathon^{™} , which is preferably present in a concentration of about 0,04 gram/liter. A composition of the invention may also comprise two or more different biocides. A composition of the invention may also comprise two or more different preservatives.

A preservative is preferably present in an amount between 0 to up to 60% (w/v), more preferred between 0.01 to up to 10 % (w/v), more preferred between 0.1 to up to 5 % (w/v), more preferred about 0.5 % (w/v) in a ready to use product for application to an agricultural crop, a plant or plant part, a soil and/or a growth substrate.

An antioxidant, when present, is preferably selected from amino acids (e.g. glycine, histidine, tyrosine, tryptophan) and their derivatives, imidazole (e.g. urocanic acid) and derivatives, vitamin C and derivatives (such as ascorbylpalmitate and ascorbyltetraisopalmitate, Mg-ascorbylphosphate, Na-ascorbylphosphate, ascorbyl-acetate), tocopherol and derivates (such as vitamin-E-acetate), mixtures of vitamin E, vitamin A and derivatives (vitamin-A-palmitate and -acetate) as well as coniferyl benzoate, rutinic acid and derivatives, □-glycosylrutin, ferulic acid, furfurylideneglucitol, carnosine, butylhydroxytoluene, butylhydroxyanisole, and trihydroxybutyrophenone. A composition of the invention may also comprise two or more different antioxidants. An anti-oxidant is preferably present in an amount between 0 to of up to 20% (w/v), more preferred between 0.1 to up to 10 % (w/v), more preferred between 1 to up to 5 % (w/v), more preferred about 3 % (w/v) in a ready to use product for application to an agricultural crop, a plant or plant part, a soil and/or a growth substrate.

An anti-foam forming agent, when present, is preferably selected from polymethylsiloxane, simethicone octanol, and silicone oils. The composition of the invention may also comprise two or more different anti-foam forming agents. An anti-foam agent is preferably present in an amount of between 0 to up to 10 % (w/v), more preferred between 0.05 to up to 5 % (w/v), more preferred between 0.1 to up to 1 % (w/v), more preferred about 0.05 % (w/v) in a ready to use product for application to an agricultural crop, a plant or plant part, a soil and/or a growth substrate.

A thickening agent, when present, is preferably selected from agar, alginic acid, alginate, carrageenan, gellan gum, xanthan gum, succinoglycan gum, guar gum, acetylated distarch adipate, acetylated oxidised starch, arabinogalactan, ethyl cellulose, methyl cellulose, locust bean gum, starch sodium octenylsuccinate, and triethyl citrate. A composition of the invention may also comprise two or more different thickening agents. A thickening agent is preferably present in an amount of between 0 to up to 10% (w/v), more preferred between 0.01 to up to 5 % (w/v), more preferred between 0.02 to up to 1 % (w/v), more preferred about 0.05 % (w/v) in a ready to use product for application to an agricultural crop, a plant or plant part, a soil and/or a growth substrate.

An UV-protector or UV absorbent, when present, is preferably selected from sulphonated tannins, titaniumdioxide, humate salts such as potassium humate, lignosulfonates, and related compounds. An UV-protector is preferably present in amount of between 0.1 and 10 % (w/v) in a ready to use product for application to an agricultural crop, a plant or plant part, a soil and/or a growth substrate.

A composition according to the invention optionally further comprises a spray oil, for example, a mineral oil such as BANOLE(R) or Spraytex.

The invention further provides a method for protecting an agricultural plant or agricultural plant part comprising providing a composition according to the invention and applying said composition to an agricultural plant or plant part such that the agricultural plant or agricultural plant part is contacted with a sufficient amount of said composition.

Said method preferably is for protecting the plant or plant part from a fungus, preferably from a mould.

The terms "plant" and "crop", as are used herein, both refer to a cultivated plant, tree or fungus that is cultivated for food, clothing, livestock fodder, biofuel, medicine, or other use.

Said plant part preferably is a leaf, stem, seed, bulb, flower bulb, seed-potato, root, tuber, fruit and/or vegetable, most preferably a seed, bulb, fruit or vegetable.

The invention further provides a method for improving the development and/or yield of an agricultural plant, comprising providing a composition according to the invention, and contacting the plant with said composition.

A composition of the invention can be applied in many different ways. For example, said composition can be applied by: (1) spraying plants in the field or in greenhouses optionally using a carrier such as a wax or an oil; (2) dipping seeds, bulbs or seed-potatoes; (3) adding to a plant part such as a seed or root system e.g. via the soil; (4) adding to a plant part such as a seed, seed-potato or bulb via a seed coating or a seed dressing; (5) adding to the soil or growth substrate in which the seeds are to be planted or germinating and/or plants or mushrooms are developing; (6) adding to water or watering systems applied in e.g. greenhouses or in the field; (6) treating harvested plant parts such as bulbs, seeds, cereals, soybeans, flowers, fruit, vegetables or plants by e.g. dipping or spraying.

A composition of the invention can be applied without diluting or after dilution. Usually the composition of the invention will be applied via an aqueous or oil dilution, via a dressing, coating or a wax. A composition is preferably diluted, preferably between 10² and 10⁶ times, in an aqueous solution or in oil, for application in the methods of the invention. It. is easy to understand that the required amount of the composition of the invention will differ per application as different applications may require different treatments. In general, however, the amount of composition in a ready-to-use composition such as e.g. a dipping or spraying suspension, calculated back to the amount of natamycin in the composition, required to treat the product (e.g. a growth substrate, a soil, a seed, a bulb, a plant in the field or a harvested fruit) will be 10 - 100,000 ppm of natamycin, more preferably 30 - 50.000 ppm of natamycin and most preferably 50 - 5000 ppm of natamycin.

The final amount of natamycin in a soil or growth medium, on a plant or on a harvested plant part can be expressed in different ways. As a first example, the amount of natamycin on e.g. a seed applied via e.g. a seed dressing or a seed coating is 0.01 to 20.0 grams of natamycin per kg of seed, more preferably 0.05 - 5.0 grams of natamycin per kg of seed, most preferably 0.1 - 2.0 grams of natamycin per kg of seed. As a second example, a composition of the invention for immersion or spraying of products such as flower bulbs, seed-potatoes, onions, apples, pears, bananas and pineapples will generally comprise 0.01 g/l to 100 g/l, preferably 0.03 g/l to 50 g/l and most preferably 0.05 g/l to 5 g/l of natamycin. After treatment of products such as flower bulbs, seed-potatoes, onions, apples, pears, bananas and pineapples, typically the amount of natamycin on the product is 0.01 - 20.0 mg/dm²; preferably 0.1 - 10.0 mg/dm². In case of treatment of mushroom growth substrate, each spray treatment will add 0.01 - 5.0 grams of natamycin per m² of growth substrate, more preferably 0.02 -1.0 grams of natamycin per m² of growth substrate. In case of treatment of a soil in which e.g. vegetables or ornamental plants are grown 0.01-5.0 grams of natamycin is applied per m² which is preferably mixed in the toplayer of the soil, more preferably 0.1 - 1.0 grams of natamycin per m². In case of a spray application on a crop in the field a typical dosage is 1 - 5000 grams of natamycin per hectare, more preferably 50 - 2000 grams per hectare. However for a crop such as bananas, the preferred dosage of natamycin is 5 -500 grams per hectare, more preferably 10 -100 grams per hectare.

A composition of the invention can be added at any suitable time using any suitable method to the growth medium, soil, plant or plant part; e.g. before, during or after planting of e.g. a seed, bulb, seed-potato, a cutting or a young plant; during growth in the field, after harvesting or during storage of a fruit, vegetable, nut or flower bulb.

A composition of the invention can be used to prepare compositions for e.g. immersion, dipping, watering, injecting in the soil, drenching, vaporizing, spraying, electrostatic spraying, fogging, fumigating, brushing, painting and mixing. When used to protect a crop in the field or in a greenhouse, a composition of the invention is mostly applied as an aqueous or oil suspension or solution by spraying or fogging. When applied post-harvest, it is preferably applied by immersion, fogging or spraying. A composition of the invention can also be applied via a watering system or by using a carrier such as a coating, dressing or wax.

The invention also provides a method for protecting a soil and/or a growth substrate, the method comprising applying to said soil and/or growth substrate a composition according to the invention. Said growth substrate preferably is a mushroom growth substrate. The soil and/or a growth substrate preferably is protected from a fungus, preferably a mould.

A composition of the invention can be applied for treatment of soil, growth substrate or mushroom growth substrate by spraying or mixing, via a watering system, via fertilizers or via e.g. a granule such as a nutrient granule.

A composition is preferably applied to a soil or growth substrate to prevent development of fungi. Examples of a soil or growth substrate are humus, soil, compost, sand, a casing or top-layer such as applied in growing mushrooms (e.g. *Agaricus bisporus* or *Pleurotus ostreatus*) and artificial growth substrates such as the ones which are applied in e.g. greenhouses for growing e.g. tomatoes, cucumbers, flowers or plants, rock wool and other artificial substrates. The composition of the invention can be physically mixed through the growth substrate, injected in the soil, sprayed on the growth substrate, applied as a soil drench, applied by soaking the growth substrate or a combination of said methods. Optionally the composition of the invention can be applied on a carrier by well-known methods. The composition of the invention can also be added to the circulating watering systems such as applied in e.g. greenhouses. Said composition may also be added to a soil or growth substrate by mixing it with an agent to add extra nutrients such as fertilizer granules and/or an agent to prevent development of harmful organisms such as microorganisms, insects, nematodes and mites; herbicides.

A composition of the invention can be applied on e.g. seeds, bulbs, seed-potatoes, root-stocks, harvested crops and tubers by e.g. immersion or spraying optionally via a dressing or a coating or by soaking or priming. The treatment can be applied at any time from the harvest to the sowing, e.g. after harvesting, during storage or just before planting.

A composition of the invention is applied on plant parts, including seeds, bulbs, tubers, root tubers, rootstocks and cuttings, directly or via a dressing such as a seed dressing or via a coating such as a seed coating to prevent growth of especially fungi on said plant parts. Seeds include seeds for growing of new plants and seeds stored as feed or food. Examples are seeds of cereals (e.g. corn, wheat, barley, rice, sorghum, oats, rye); nuts (e.g. peanuts, coffee, cacao, almonds, pistachios); leguminous plants (e.g. soy beans, beans) vegetables (e.g. lettuce species, cabbage species, broccoli, spinach, tomatoes, paprika, cucumbers, onions); fruit plants (e.g. grapes, citrus fruit, apples, pears, stone fruit); ornamental plants (e.g. roses, chrysanthemum, geranium, petunia, begonia); fibrous plants (e.g. cotton); oleaginous plants (e.g. rapeseed, sunflower, cocoa, ground-nuts); flowers (e.g. rose, lily, orchid). Example of bulbous or tuberous plants are flower bulbs (e.g. tulip, lily, hyacinth, crocus, narcissus), seed-potatoes and onions. An example of a root tuber is a dahlia.

Crops in the field can be sprayed at any suitable moment, e.g. preventively before a mould infection develops, after a mould infection developed, before / during / after flowering; before / during / after e.g. fruit, nuts and grains develop. When the risk of infection is high, e.g. during a rain season for tropical crops or in case of bad weather conditions, a composition of the invention can be applied more regularly. When the risk of infection is lower, spray intervals may be longer. Harvested crops such as fruits, vegetables, flowers and nuts can be treated e.g. by immersing or spraying at any time after harvesting.

Examples of crops are cereals (e.g. corn, wheat, barley, rice, sorghum, oats, rye); tropical fruit (e.g. banana, pineapple, papaya, kiwi and mango fruit); citrus fruit (e.g. oranges, lemons, limes, mandarins and grapefruits); pome fruits (e.g. apples and pears); stone fruit (e.g. peaches, cherries, almonds, plums and apricots); berries (e.g. strawberries, raspberries, blackberries and currants); vegetables (e.g. lettuce, cabbage, tomatoes, cucumbers, paprika, peppers, onions, carrots, potatoes); leguminous plants (e.g. beans, peas, soy beans); oleaginous plants (e.g. rapeseed, sunflower, cocoa, ground-nuts, coconut); cucurbitaceae (e.g. cucumber, aubergines, melons, pumpkins); fibrous plants (e.g. cotton); ornamental plants, trees and flowers (e.g. tulip, lily, rose, orchids, chrysanthemum, petunia, begonia, violet, dahlia, fuchsia, gerbera, narcissus, crocus, conifers); other crops such as coffee, tea, rubber, grapevines, nuts, pistachios, tobacco, conifers, sugarcane, sugar beet, fodder beet and hop.

Usually a device is used to apply a composition of the invention. Any device known in the art can be used. Examples are equipment for injecting the composition in the soil or growth substrate; equipment for mixing it through soil, growth substrate or compost; watering and fogging systems in greenhouses; equipment for spraying on a growth substrate, on a crop in the field or in a greenhouse using e.g. a plane or helicopter; equipment for immersing harvested fruit, bulbs, seeds, seed-potatoes, cereals or vegetables; equipment in which harvested crops are washed; equipment applied to fog, spray or brush bananas; equipment to apply a coating or a wax on e.g. apples or pineapples.

A composition according to the invention may be applied to plant parts after harvesting. Examples of such plant parts are cereals (e.g. corn, wheat, barley, rice, sorghum, oats, rye); tropical fruit (e.g. banana, pineapple, papaya, kiwi and mango fruit); citrus fruit (e.g. oranges, lemons, limes, mandarins and grapefruits); pome fruits (e.g. apples and pears); stone fruit (e.g. peaches, cherries, almonds, plums and apricots); berries (e.g. strawberries, raspberries, blackberries and currants); vegetables (e.g. lettuce, cabbage, tomatoes, cucumbers, paprika, peppers, onions, carrots, potatoes); seeds from leguminous plants (e.g. beans, peas, soy beans); seeds from oleaginous plants (e.g. rapeseed, sunflower, cocoa, ground-nuts, coconut); cucurbitaceae (e.g. cucumber, aubergines, melons, pumpkins); flowers (e.g. tulip, lily, rose, orchids, chrysanthemum, dahlia, gerbera, narcissus, and other harvested plant parts such as coffee beans, tea leafs, grapes, nuts, pistachios and tobacco.

The invention further provides use of a composition according to the invention for protecting a plant, plant part, soil and/or growth substrate, preferably from a plant disease and/or a fungus such as a mould.

Examples of plant diseases and moulds which can be combatted with a composition of the invention are:
(1) Soilborne diseases. A first example of a soil-related mould disease is Fusarium wilt or Panama disease caused by *Fusarium oxysporum* f. sp. cubense. Other soilborne phytopathogenic fungi are for example other *Fusarium* species such as *Fusarium oxysporum* f.sp. lycopersici and *Fusarium oxysporum* f. sp. fragariae, *Rhizoctonia solani, Sclerotinia* species, *Pythium* species and *Pestalotiopsis clavispora.* In addition, more specific major soil-borne pathogens on different crops are for cereals e.g. *Gaeumanomyces graminis,* Pseudocercosporella herptrichoides, *Bipolaris sorokiniana* and *Polymyxa graminis;* for corn e.g. *Fusarium moniloforme, Colletotrichum graminicola, Gibberella zeae* and *Macrophomina phaseolina;* for rice e.g. *Sclerotium oryzae,* Helminthosporium oryzae, *Curvularia lunata, Bipolaris oryzae* and *Achlya* species; for cotton e.g. *Fusarium oxysporum, Thielaviopsis basicola, Macrophomina phaeseolina* and *Glomerrella gossypii;* for soybean e.g Fusarium virguliforme, *Phytophthora sojae, Sclerotium rolfsii, Macrophomina phaeseolina* and *Phialophora gregata;* for potato e.g. *Rhizoctonia solani, Phoma* species, *Helminthosporium solani, Colletotichum coccodes, Fusarium sambucinum, Spongospora subterranean* and *Phytophthora erythroseptoca.* Examples of unwanted moulds which may occur in mushroom growth substrate are e.g. *Trichoderma* species (e.g. *T. harzianum, T. aggresivum* and *T. viride*), *Verticillium* species (e.g. *V. fungicola* var. fungicola and *V. fungicola* var. aleaophilum), *Aspergillus* species, *Penicillium* species, *Dactylum* species (e.g. *D. dendroides*) and *Mycogone* species (e.g. *M. pernicosa*).
(2) Seed-borne diseases and diseases on bulbs and tubers. Examples of mould diseases on flower bulbs such as tulip and lily are *Fusarium* species such as *Fusarium oxysporum, Botrytis* species, *Pythium* species, *Rhizoctonia* species and *Stagnospora* species. Examples of mould diseases on seed-potatoes are *Fusarium* species (e.g. *Fusarium solani*), *Rhizoctonia solani, Phoma* species, *Helminthosporium solani, Colletotichum coccodes* and *Penicillium* species. Key diseases occurring on seeds such as seed rot are caused by e.g. *Aspergillus* species (e.g. A. *terreus), Penicillium* species and *Phomopsis* species; the damping-off disease on seeds is caused by e.g. *Pythium* species, *Fusarium* species and *Rhizoctonia* species; the post-emerge disease is caused by e.g. *Helminthosporium* species, *Ustilago* species and *Tilletia* species. The main seed-borne fungi on cereals are *Fusarium* species, *Alternaria* species, Cochliobilus sativus, *Stagnospora nodorum, Ustilago nuda* and *Claviceps purpurea.* Important seed-borne fungi on soybean are *Phomosis* species, *Diaporthe* species, *Peronospora manshurica, Cercospora kikuchii, Alternaria* species and *Fusarium* species. Major seed-borne fungal pathogens on rice are *Fusarium* species, *Alternaria padwickii, Curvularia lunata, Bipolaris oryzae, Helminthosporium* species and *Pyricularia oryzae.* Important seed-borne pathogens on corn are *Fusarium* species, *Penicillium* species, *Aspergillus* species, *Bipolaris* species, *Alternaria* species and Rhizopus species. On cotton seeds e.g. *Aspergillus* species, *Thielaviopsis* species and *Fusarium* species may develop.
(3) Moulds on a crop in the field (pre-harvest). Examples of leaf mould diseases on banana plants are Sigatoka leaf spot or yellow Sigatoka caused by *Mycosphaerella musicola* and Black Sigatoka caused by *Mycosphaerella fijensis.* An example of a disease on potato plants is early blight disease caused by *Alternaria* species such as *Alternaria solani* and *Alternaria alternate.* Another example of a disease on potato plants, but also of importance for tomato plants, is late blight disease caused by *Phytophthora infestans. Alternaria* species are also able to damage crops in the field such as vegetables, cotton, tobacco and cereals or may cause black spot disease on tomatoes, onions and carrots. *Fusarium oxysporum* is one of the most important pathogenic moulds on many crops such as corn and soya, Powdery mildew is an important disease on many crops which can be caused by different fungal species. Examples are Erysiphe species (e.g. *E. necator* on grapes, *E. betae* on sugarbeet, *E. cruciferarum* on cabbage, *E. graminis* species on cereals), *Oidium lycopersicum* on e.g. tomato, *Podosphaera* species on e.g. rose, apple and strawberry, *Blumeria graminis* on wheat and barley, *Sphaerotheca fusca* on cucumber and melon and *Leveillula taurica* on paprika, pepper and aubergine. Downey mildew is a major plant disease which can be caused by many different fungal species. Examples are *Plasmopara viticola* on e.g. grapevine, *Pseudoperonospora humuli* on e.g. hop, *Peronospora parasitica* on e.g. cabage, *Peronospora destructor* on e.g. onion, *Peronospora belbahrii* on e.g. basil, *Pseudoperonospora cubensis* on e.g. cucumber, melon or cantaloupe, *Pseudoperonospora farinosa* f.sp. betae on e.g. sugarbeet, *Bremia lactucae* on e.g. lettuce.
(4) Moulds growing on harvested agricultural products (post-harvest). Moulds which can develop on harvested fruit such as apples, pears, citrus fruit, stone fruit and berries are for example *Botrytis cinerea* on grapes and soft fruit, *Botrytis aclada* on onions, legumes and fruits, *Gloeosporium fructigenum,* Gloeosporium perennans, *Phytophthora cactorum, Phytophthora syringae, Penicillium* species (e.g. the mycotoxin patulin producing *P. expansum* on pomaceous fruits and nuts, *P. digitatum* and *P. italicum* on citrus fruit, *P*. *verrucosum* and *P. viridicatum* on cereals), *Fusarium moniloforme* on corn, *Rhizopus stolinifer* on strawberries. *Aspergillus flavus* has the ability to produce the mycotoxin aflatoxin, especially in peanuts, pistachio nuts, Brazil nuts and corn. *Aspergillus fumigatus* may develop on a wide range of stored fruits, crops, cereals, cocoa beans and nuts. *Aspergillus pullulans* may develop on stored grains, strawberries, citrus fruit and cherries. Examples of fungal pathogens commonly found on pineapples are *Thielaviopsis paradoxa, Penicillium funicolosum, Fusarium oxysporum, Rhizophus stolonifer* and *Aspergillus niger.* On bananas the most important disease after harvesting is crown rot which can be caused by a number of fungal species: examples of fungal pathogens commonly found on bananas are *Colletotrichum musae, Thieliaviopsis paradoxa, Fusarium roseum, Verticillium theobromae, Lasiodiplodia theobomae* and *Deightoniella torulosa.*

The methods of the current invention can produce growth substrate, soil, agricultural products including plants such as crops in the field and plant parts such as harvested products containing the composition of the invention.

### Figure legends

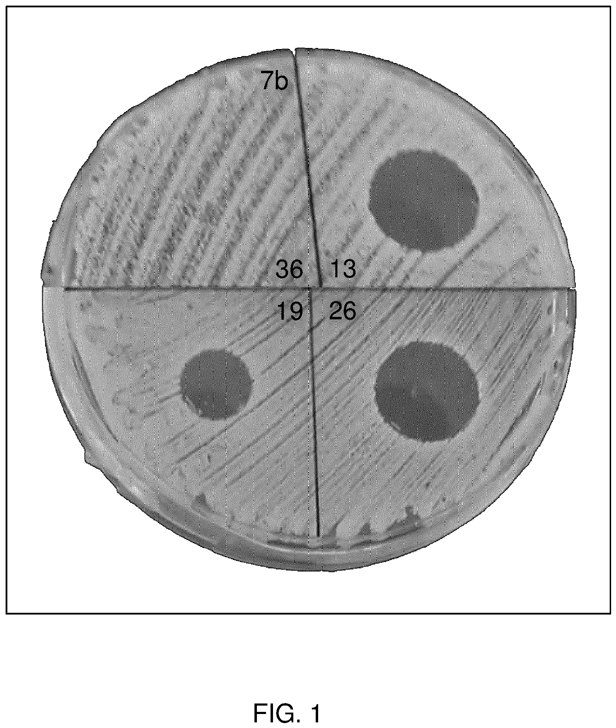

Figure 1. Example of Petri dish with lesion zones. Reference "36":
palmitic acid 0.03 mM; Reference "13" butanoic acid 0.3 mM and 3 mM natamycin; Inventive "19": palmitic acid 0.03 mM and 3 mM natamycin; Reference "26" : stearic acid 0.9 mM and 3 mM natamycin.

### Example 1: Synergistic antifungal activity of natamycin and fatty acids against Fusarium oxysporum

The synergistic antifungal activity of the combination of natamycin and a cocktail of four fatty acids (palmitic acid, stearic acid, oleic acid and linoleic acid) against *Fusarium oxysporum* was demonstrated in an in vitro assay using 96-well microtiter plates.

Natamycin (95% pure) was obtained from the company Freda, China; sodium palmitate and sodium linoleate were obtained from Sigma, USA; oleic acid sodium salt and stearic acid sodium salt were obtained from Carl Roth, Germany.

A 5.0 mM (4 x 1.25 mM each) stock solution of the four sodium salts of palmitic acid, stearic acid, oleic acid and linoleic acid was prepared using well-known methods.

A spore suspension of a wild strain of the soilborne mould *Fusarium oxysporum* f. sp. cubense, the Panama disease pathogen of banana plants, was prepared using well-known methods.

For the experiment, a freshly prepared spore suspension and a freshly prepared solution of the sodium salts of the fatty acids were prepared. Natamycin was dissolved in 80% DMSO using well-known methods. Fungal growth medium (Malt Extract Agar), the *Fusarium oxysporum spore suspension* (10.000 spores per well) and the fatty acids and/or natamycin solutions in different concentrations were added to the wells of the microtiter plates using well-known methods. The experiment was executed in duplo. After incubation of the microtiter plates for 5 days on the dark at 24°C the microtiter plates were examined for the presence or absence of visible mould development. The results are shown in Table 1.

**Table 1. Synergistic effect of natamycin and fatty acids against Fusarium oxysporum**

| Fatty acids | Natamycin | | | | | | | |
|---|---|---|---|---|---|---|---|---|
| | 0 | 1µM | 2 µM | 3 µM | 4 µM | 5 µM | 6 µM | 7 µM |
| 0 | ++ | ++ | ++ | ++ | ++ | ++ | ++ | ++ |
| 2.3 µM | ++ | ++ | ++ | ++ | ++ | +/- | -- | --(inventive) |
| 4.5 µM | ++ | ++ | ++ | ++ | ++ | -- | +/- | -- |
| 250 µM | ++ | ++ | ++ | ++ | ++ | -- | -- | -- |

| | | | | | | | | |
|---|---|---|---|---|---|---|---|---|
| +: visible mould growth -: no visible mould growth | | | | | | | | |

These results show that the sensitivity of *Fusarium oxysporum* for natamycin is > 7uM; the sensitivity for the cocktail of fatty acids is > 250 µM.

The results reported in Table 1 clearly demonstrate synergy between natamycin and fatty acids. Even at extremely low concentrations of fatty acids (2.3 µM and 4.5 µM) development of mould growth was almost completely prevented at a concentration of 5-6 µM of natamycin; at 7 µM of natamycin, no growth was observed at all in the presence of fatty acids. At 5-7 µM of natamycin and 250 µM of fatty acids, the *Fusarium* mould was completely inhibited.

Example 2: The effect of natamycin in combination with different concentrations of a range of fatty acid sodium salts.

This example demonstrates the enhanced fungicidial effects of natamycin in combination with different concentrations of fatty acid sodium salts. *Saccharomyces cerevisiae* (at least 10⁵ cfu/ml) was distributed on Petri dishes with a diameter of 145 mm containing 30 ml Potato Dextrose Agar (PDA; Carl Roth; pH of about 6) using sterilized swabs. Filter paper discs (Whatman, Antibiotic Assay Paper, grade AA) with a diameter of 6 mm were loaded with 40 µl of a solution of 3 mM natamycin (Chinonbio, China, 95%) plus 0, 0.03, 0.09, 0.3 or 0.9 mM of sodium salts of butanoic acid (Carl Roth >99%), caprylic acid (Carl Roth, >99.5%), palmitic acid (Sigma, sodium palmitate 98.5) or stearic acid (Carl Roth, sodium stearate 88-92%). As controls, the effects of the fatty acid salts alone (without natamycin) were tested. Yeast growth was also measured after incubation on medium without natamycin and fatty acid salts.

Following the application of a filter, Petri dishes were incubated upside down for 24 h in a refrigerator at 4°C to allow diffusion of natamycin into the agar. After 24 h the filter discs were removed from the agar and the Petri dishes were incubated upside down in a stove at 30°C. The size of the inhibition zone shows the efficacy against yeast of the natamycin and / or fatty acid salts released from the filter disc (see, for example, Figure 1). After 16 h incubation in the stove the size of the inhibition zone was determined using a digital caliper gauge. The data are presented as square mm and are an average of four replicas.

**Table 2. Efficacy of natamycin and fatty acids against S. cerevisiae The effect of presence (+) or absence (-) of 3 mM natamycin plus different concentrations of reference sodium butanoate, sodium caprylate and sodium stearate and inventive sodium palmitate on yeast growth in Petri dishes as described herein above. Numbers represent surface of inhibition zones expressed in square mm after 16 h.**

| Fatty Acid concentration (mM) | butanoic acid-Na | | caprylic acid-Na | | palmitic acid-Na | | stearic acid-Na | |
|---|---|---|---|---|---|---|---|---|
| Natamycin | + | - | + | - | + | - | + | - |
| **0** | 585 | 0 | 585 | 0 | 585 | 0 | 585 | 0 |
| **0.03** | 629 | 0 | 492 | 0 | 409 | 0 | 567 | 0 |
| **0.09** | 624 | 0 | 637 | 0 | 620 | 0 | 587 | 0 |
| **0.3** | 652 | 0 | 681 | 0 | 672 | 0 | 620 | 0 |
| **0.9** | 628 | 0 | 539 | 0 | 490 | 0 | 569 | 0 |

All fatty acid salts at concentrations of 0.09 mM and 0.3 mM enhanced natamycin-inhibited yeast growth, which is evident as an increase in surface area of the inhibition zone, compared to 0 mM fatty acids or to only fatty acids. The molar ratio between natamycin and fatty acid salts was 3 : 0.09 (33 to 1) and 3 : 0.3 (10 to 1). This means that fatty acid concentrations that are between 1 and 30 %, preferably between 3 and 10 % of the natamycin concentration enhances the effect of natamycin.

These results show that the fatty acid sodium salts themselves did not inhibit the growth of yeast on the petri dishes at concentrations that enhance the effect of natamycin-induced inhibition of yeast growth.

Reference example 3:
Effect of natamycin in combination with different concentrations of potassium and ammonium salts of caprylic acid.

This example demonstrates that potassium and ammonium salts also enhance the biocide effect of natamycin on yeast cells.

The experiment was performed as described in example 2, except that the diameter of the petri dishes was 90 mm. Measurement of the inhibition zone was after 16 hours.

The results are presented in Table 3.

**Table 3. Effect of potassium and ammonium salts on natamycin efficacy against yeast cell on petri dishes. Numbers represent surface of inhibition zones expressed in square mm after 16 h.**

| Fatty Acid concentration caprylic acid (mM) | potassium salt | | ammonium salt | |
|---|---|---|---|---|
| Natamycin | + | - | + | - |
| **0** | 788 | 0 | 788 | 0 |
| **0.03** | 788 | 0 | 788 | 0 |
| **0.09** | 835 | 0 | 821 | 0 |
| **0.3** | 869 | 0 | 798 | 0 |
| **0.9** | 825 | 0 | 850 | 0 |

Both the ammonium and potassium salts of caprylic acid enhanced natamycin-inhibited yeast growth at 0.09, 0.3 and 0.9 mM, which is evident as an increase in surface area of the inhibition zone, compared to 0 mM fatty acids plus natamycin or to only fatty acids. The potassium and ammonium salts themselves did not inhibit growth of yeast on the petri dishes at concentrations that enhance the effect of natamycin-induced inhibition of yeast growth.

### Example 4: Antifungal effect of natamycin in combination with a mix of fatty acid sodium salts

This example demonstrates the antifungal effect of natamycin in combination with a mix of fatty acid sodium salts.

*Saccharomyces cerevisiae* (at least 10⁵ cfu/ml) was distributed on Petri dishes with a diameter of 90 mm containing 10 ml PDA agar (Carl Roth, pH about 6) using sterilized swabs. Filter paper discs (Whatman) with a diameter of 6 mm were loaded with 50 µl of a solution containing a concentration of 3 mM natamycin plus 0.3 mM of a mixture of oleic acid sodium salt and stearic acid sodium salt in a 50/50 ratio (this mixture will be referred to as fatty acid mix).

As controls, the effect of the fatty acid mix alone (without natamycin) was tested on yeast growth. Yeast growth was also determined after incubation on medium without both natamycin and fatty acid salts.

The size of the inhibition zone is a result of the natamycin and / or fatty acid salts released from the sample disc. After 16 h of incubation in the stove the size of the inhibition zone was measured using a digital caliper gauge. The data are presented as square mm and are an average of four replicas.

**Table 4. Effect of 3 mM natamycin plus 0.3 mM of a mix of oleic acid sodium salt and stearic acid sodium salt on yeast growth in petri dishes. Numbers represent inhibition zones expressed in square mm after 16 h.**

| **Concentration** | **Inhibition zone (mm²)** |
|---|---|
| Water | 0 |
| 0.3 mM FA mix | 0 |
| 3 mM natamycin | 480 |
| 3 mM natamycin + 0.3 mM FA mix | 617 |

### Example 5: Antifungal effect of fatty acid sodium salts in combination with natamycin against Botrytis on apples

This example demonstrates the antifungal effect of fatty acid sodium salts in combination with natamycin against *Botrytis* on apple.

Tested fruit: apples cv Maribelle from organic origin/SKAL certified. SKAL is a semi-governmental Dutch organization that controls organic production in the Netherlands. Wounds of the apples were checked at day 5 and 7. A mixture of fatty acid sodium salts containing oleic acid sodium salt and stearic acid sodium salt in a 50/50 ratio was used in this experiment and will be referred to as fatty acid mix.

Tested treatments:
1) 0.3 mM fatty acid mix
2) 0.6 mM fatty acid mix
3) 3 mM natamycin (Chinonbio 95%)
4) 3 mM natamycin + 0.3 mM fatty acid mix (FA)
5) 3 mM natamycin + 0.6 mM fatty acid mix
6) Untreated control
7) Control without fungal infection

Used pathogen: *Botrytis cinerea* spore-suspension containing 10⁶ spores/ml.

Application: The fruit peel of the apple was damaged with a cork borer, ø 4 mm and depth ~0,5 cm into the fruit, with 2 wounds per apple. 40 microliter of a freshly prepared spore suspension of *B. cinerea* was applied by pipette onto each wound. Subsequently, the spore-suspension was allowed to air-dry for 4 hours. Then, 40 microliter of a treatment as presented in the list above was applied by pipette to each wound.

All fruits were kept at room temperature (20 °C). Wounds of the apples were checked after 4 and 7 days of incubation. The recorded antifungal activity is the surface area (square mm) of the rot for the apple compared to the untreated control (see Tables 5, 6 and 7).

Replicates: All treatments for the apple experiment were performed on six individual apples with two wounds each resulting in 12 wounds per treatment.

### Results

The results of these experiments are depicted in Tables 5-7.

**Table 5: Efficacy of natamycin and a fatty acid cocktail against rot on apples Rot on apples treated with 40 µl of 3 mM natamycin plus 0, 0.3 and 0.6 mM fatty acid mix after inoculation. Control is incubation without natamycin and fatty acid salts.**

| - Crop: apple fruits | | |
|---|---|---|
| Treatments | Incubation time (days) | Antifungal activity (%) |
| Control | 5 | 0 |
| 0.3 mM FA | | -13 |
| 3 mM Natamycin | | 62 |
| 3 mM Natamycin + 0.3 mM FA | | 91 |
| Control | 5 | 0 |
| 0.6 mM FA | | 12 |
| 3 mM Natamycin | | 62 |
| 3 mM Natamycin + 0.6 mM FA | | 93 |
| Control | 7 | 0 |
| 0.3 mM FA | | -21 |
| 3 mM Natamycin | | 50 |
| 3 mM Natamycin + 0.3 mM FA | | 87 |
| Control | 7 | 0 |
| 0.6 mM FA | | 5 |
| 3 mM Natamycin | | 50 |
| 3 mM Natamycin + 0.6 mM FA | | 79 |

**Table 6. Lesion area on apple fruits per treatment (mm²) 5 days after inoculation**

| %FA\Nata | no natamycin | 3 mM natamycin |
|---|---|---|
| 0 | 243 | 130 |
| 0.3 mM FA | 387 | 31 |
| 0.6 mM FA | 301 | 23 |

**Table 7. Lesion area on apple fruits per treatment (mm²) 7 days after inoculation**

| %FA\Nata | no natamycin | 3 mM natamycin |
|---|---|---|
| 0 | 615 | 308 |
| 0.3 mM FA | 743 | 83 |
| 0.6 mM FA | 586 | 127 |

### Example 6. Effect of partially purified natamycin from a fermentation broth containing fatty acids on development of corn seedlings

Preparation and formulation of a Natamycin Composition containing fatty acids. This example describes the preparation and formulation a natamycin composition made up of about 60% natamycin and 40% of other compounds from a fermentation broth of *Streptomyces natalensis.*

A fermentation using *Streptomyces natalensis* was performed. After termination of the fermentation, a natamycin composition was recovered. In particular, the fermentation broth was filtered; the filtration cake was treated with methanol and 20% NaOH at a pH of about 9-10. After two additional filtration and elution steps, the pH was adjusted to about pH 6.5 by adding 15% HCL. The final natamycin content was set at 60% by addition of 20% glucose. The resulting product was dried and then milled. In particular, 250 g of the dry product per liter of water was milled using a bead mill to obtain more homogeneous particles with an average size of about 2 µm.

As used in the examples herein, "Natamycin Composition A" refers to a natamycin composition comprising the components shown in Table 8 below milled to a D50 (mass median diameter) of 2 µm.

**Table 8.**

| **Compound** | **Content (%)** |
|---|---|
| Natamycin | 58.5-61.5 % |
| Natamycin methylester | 1.5-4 % |
| Water content | < 8 % |
| Fatty Acids | 6-10 % |
| Protein | 9.60% |
| Glucose | 20% |
| Starch | 1.20% |

As used in the examples herein, "Control Natamycin" refers to a commercially available natamycin with a purity of 95% or greater milled to a D50 (mass median diameter) of 2 µm.

Natamycin Composition A and Control Natamycin were formulated using the ingredients provided in Table 9 below. Natamycin Composition A according to the following formulation will be referred to as "Formulation 1". Control natamycin according to the following formulation will be referred to as "Control Natamycin Formulation".

**Table 9.**

| **Ingredient** | **g/l** | **w/w** % |
|---|---|---|
| Natamycin composition A | 100 | 9,09 |
| Atlas G 5002-L | 20 | 1,82 |
| MetaSperse 550 S | 8 | 0,73 |
| Glycerol | 252 | 22,9 |
| Rhodorsil 426R | 6 | 0,55 |
| Rhodopol 23 (2% in water) | 77 | 7 |
| Water | 637 | 57,9 |
| Totals | 1100 | 100 |

Natamycin Composition A was formulated to produce Formula 1 according to the following protocol. Glycerol was first added to water and, while stirring, the surfactants AtlasTM G 5002-L (Croda Crop Care, Cowick Hall, DN14 9AA, UK) and MetaSperse TM 550 S (Croda Crop Care, Cowick Hall, DN14 9AA, UK) were added. After stirring for 30 minutes, 4.8 g of the antifoaming agent Rhodorsil^{®} 426R (Rhodia Inc., Cranbury, NJ) was added. Natamycin Composition A and Control Natamycin added portion-wise and the suspension was stirred for an additional 30 minutes. The suspension was milled to an average particle size of about 1.7 µm. The suspension was collected and the remaining 1/5 part of Rhodorsil^{®} 426R was added. After stirring for 30 minutes the viscosity modifier Rhodopol^{®} 23 (Rhodia Inc., Cranbury, NJ) was added. After stirring for an additional 3 hours, the formulations were obtained. Control Natamycin was also formulated using the protocol set forth above to produce Control Natamycin Formulation.

### Example 7. Effect on Development of Corn Seedlings

This example demonstrates the effect of Natamycin Composition A on the development of corn seedlings.

Formulation 1 and Control Natamycin Formulation were applied to corn seeds (150 seeds per treatment). The dosages are listed in Table 15 below. A set of untreated control seeds were also included in the study. Following treatment, the seeds were incubated using a cold test protocol that simulates the unfavorable cold and wet weather conditions that may occur during the planting season. The results of this test are used to predict performance a seed lot will under similar conditions in the field. To perform the test, the seeds were first packed in rolls with saturated field earth and paper towels, then the rolls were placed in plastic bags. The seeds were turned so that the side of the kernel closest to the embryo was down against the soil. The source of the field earth was a plot where corn was previously grown and the soil was known to contain a high number of unidentified mold species. After an incubation period under cold conditions (7 days at 8°C in the dark followed by 7 days at 25°C in the light) the number of normal seedlings, abnormal seedlings, and dead seeds were recorded.

The results are summarized in Table 10 below. Over the course of the experiment, no phytotoxicity resulting from the natamycin treatment was observed.

**Table 10.**

| Treatment % | healthy plants % | abnormal plants % | dead seeds |
|---|---|---|---|
| Untreated | 0 | 2 | 98 |
| Control Natamycin Formulation (0.25 g Control Natamycin / kg of seed) | 11 | 4 | 85 |
| Formulation 1 (0.25 g Natamycin Composition A / kg of seed) | 14 | 13 | 73 |
| Control Natamycin Formulation (0.5 g Control Natamycin / kg of seed) | 12 | 7 | 81 |
| Formulation 1 (0.5 g Natamycin Composition A (/ kg of seed) | 20 | 12 | 68 |

The number of healthy seedlings observed was unexpectedly greater when Formulation 1 was applied compared to Control Natamycin Formulation. In particular, dosages of Natamycin Composition A at 0.25g/kg of seed and 0.5g/kg of seed resulted in 1.3 and 1.7 times more in the number of healthy plants, respectively, than the identical dosage of Control Natamycin.

### Example 8. Effect on Bananas against Mycosphaerella fijiensis

This example demonstrates the efficacy of Natamycin Composition A for the control of *Mycosphaerella fijiensis.* An experimental unit had 9 banana plants that were planted in plots with 3 m between plants. The trial followed a complete randomized design and each treatment was replicated three times. Border rows between the treated plants were planted with *Musa textilis,* a variety of banana plant tolerant to black Sigatoka. All treatments were applied using a motor blower to give a total treatment volume of 23 L/ha. The tested treatments were applied as an oil-water emulsion using Spraytex^{®} oil (5 L/ha) and 1% Imbirex emulsifier. The tested fungicide treatments are listed in Table 11 below, along with their respective active ingredient(s) and dilution (or concentration). The last application of the experimental test treatment was performed on 13 weeks after the first application. A total of 16 consecutive applications were performed over the course of the study.

**Table 11.**

| **Treatment** | **Active Ingredient** | **Dilution or l/ha** |
|---|---|---|
| 1. Control Natamycin Formulation + Dithane 1.0 l/ha | Control Natamycin + mancozeb | 100 X |
| 2. Formulation 1 + Dithane 1.0 l/ha | Natamycin Composition A + mancozeb | 100 X |
| 3. Control Natamycin Formulation + Dithane 0.5 l/ha | Control Natamycin + mancozeb | 100 X |
| 4. Formulation 1 + Dithane 0.5 l/ha | Natamycin Composition A + mancozeb | 100 X |
| 5. Control Natamycin Formulation^{∗} | Control Natamycin | 50 X |
| 6. Dithane 0.5 l/ha | Mancozeb | 0.5 l/ha |
| 7. Dithane 1.0 l/ha | Mancozeb | 1.0 l/ha |
| 8. Dithane 2.0 l/ha | Mancozeb | 2.0 l/ha |
| 9. Mineral oil | Mineral oil-Spraytex^{®} | 5.0 l/ha |
| 10. Untreated plants | - | - |

| | | |
|---|---|---|
| *Control Natamycin Formulation was provided as a suspoemulsion including oil | | |

The following variables were evaluated every week for each of the treatments: total leaves per plant, youngest leaf with streaks (i.e., youngest leaf infected (YLI)), youngest leaf with spots (YLS) and disease severity. The first appearance of symptoms in banana leafs correlated with the severity of the infection: the lower the leaf number in which the symptoms appear, the higher the level of infection. Disease evaluations were conducted once the first applied leaf reached position #4 and every 7 days henceforth until one week after the final treatment application. Note that Position 4 is leaf 4. The treatment response to black Sigatoka was evaluated using the Stover scale modified by Gauhl (Table 12 below) and the results of the evaluations are shown in Table 13 below.

**Table 12. Stover scale modified by Gauhl used to determine disease grade**

| **Grade** | **Description** |
|---|---|
| 0 | No symptoms of the disease |
| 1 | Streaks to a maximum of 10 spots |
| 2 | 11 spots to 5 % of the leaf area |
| 3 | 6-15 % |
| 4 | 16-33% |
| 5 | 34-50 % |
| 6 | More than 50 % |

**Table 13.**

| **Treatment** | **Average YLI** | **Average YLS** | **Average Number of leaves** | **Average Severity** |
|---|---|---|---|---|
| 1. Control Natamycin Formulation + Dithane 1.0 l/ha | 4.7 | 5.4 | 6.6 | 0.71 |
| 2. Formulation 1 + Dithane 1.0 l/ha | 4.7 | 5.4 | 6.9 | 0.74 |
| 3. Control Natamycin Formulation + Dithane 0.5 l/ha | 4.4 | 5.0 | 6.5 | 0.86 |
| 4. Formulation 1 + Dithane 0.5 l/ha | 4.6 | 5.3 | 7.3 | 0.85 |
| 5. Control Natamycin Formulation^{∗} | 4.1 | 4.7 | 7.2 | 1.40 |
| 6. Dithane 0.5 l/ha | 4.6 | 5.3 | 7.4 | 0.95 |
| 7. Dithane 1.0 l/ha | 4.9 | 5.7 | 7.0 | 0.63 |
| 8. Dithane 2.0 l/ha | 4.8 | 5.6 | 7.1 | 0.60 |
| 9. Mineral oil | 4.2 | 4.9 | 7.3 | 1.35 |
| 10. Untreated plants | 3.3 | 4.3 | 7.4 | 2.17 |

| | | | | |
|---|---|---|---|---|
| *Control Natamycin Formulation was provided as a suspoemulsion including oil | | | | |

With the exception of the oil treatments (Table 13, entries 5 and 9) all treatments had a severity below 1 while the untreated plant had a severity above 2. All treated plants have an average YLI between 4 and 5, while the untreated plant had an average YLI of 3.3. Both conclusions indicate that all treatments had a fungicide effect. These results were unexpected because Formulation 1 contains a lower percentage of the active ingredient than Control Natamycin Formulation, yet its efficacy was comparable. Formulation 1 had the same efficacy against fungi as a commercial product with the active ingredient mancozeb.

Example 9. Effect of fatty acids on the saturation level of natamycin in water.

Natamycin, which was 95% pure (ChihonBio, China), was combined with different amounts of the salts of oleic acid and stearic acid (50:50 ratio) as follows: natamycin powder plus dry fatty acid salts were vigorously milled by hand for approximately 60 sec in a ceramic mortar using a pestle. 250 mg of grinded natamycin-fatty acid salts was transferred into a small beaker glass and 5 ml demi water was added. The slurry obtained was stirred over night at room temperature. Hereafter, 1 ml of homogeneous natamycin/fatty acids slurry was transferred into a 2 ml Eppendorf tube and centrifuged for 45 min at 14500 rpm. The supernatant was diluted 5-fold in an acetonitrile:H2O mixture (38:62). A sample was injected onto the HPLC.

The HPLC analysis was as follows:
The HPLC system was an Agilent 1100 system. The column used was a Zorbax Bonus-RP, 4.6 x250 mm, 5 µm. The mobile phase consisted of acetonitrile : phosphate buffer (0.7 g/l Na2HPO4.2H2O + 6.39 g/l NaH2PO4.H2O) pH 5.8 (28 : 72). The speed of the flow was 1.0 ml/min and the column temperature was 25 °C. The injection volume was 5 µl. Natamycin was detected with a spectrophotometer at a wavelength of 304 nm.

### Results

In Table 14 the effect of a 50-50 combination of the sodium salts of oleic acid and stearic acid on the solubility of natamycin in water. The experiment was performed in duplicate and values of the amount of dissolved natamycin in water are averages of the duplicates.

**Table 14: Dissolution of natamycin**

| Ratio of natamycin : salts of the mix of oleic and stearic acid (g : g) | Dissolved natamycin in water (mg/l) |
|---|---|
| 1:0 | 46 (reference) |
| 1 : 0.05 | 428 |
| 1 : 0.10 | 905 |
| 1 : 0.22 | 1257 (reference) |
| 1 : 0.40 | 1757 (reference) |

Natamycin without addition of fatty acids dissolved in water to a standard level of about 46 ppm. From this experiment, it can be concluded that addition of fatty acid salts leads to a strong increase in the solubility level: addition of only 10% fatty acids salts compared to natamycin (w/w) already leads to an almost 20-fold increase in the solubility of natamycin in water.

## Claims

1. An antifungal composition comprising natamycin and a fatty acid selected from palmitic acid, oleic acid and linoleic acid, or a salt thereof, wherein the natamycin has an average particle size of between 0.2 and 10 micrometer, and wherein all C4-C22 fatty acids or salts thereof in said composition are present at a concentration between 1 and 30 mol% of the natamycin concentration.

2. The antifungal composition according to claim 1, comprising 1% to 98% (w/w) of natamycin, preferably 6% to 60% (w/w) of natamycin.

3. The antifungal composition according to any one of claims 1-2, comprising at least two fatty acids selected from palmitic acid, oleic acid and linoleic acid, or salts thereof.

4. The composition according to any one of claims 1-3, which is an aqueous or oily composition.

5. The composition according to any one of claims 1-4, wherein the composition further comprises proteins as components of cellular matter from a natamycin-producing bacterium.

6. The composition according to any one of claim 1-5, wherein the at least one fatty acid or salt thereof is present at a concentration of between 3 and 10 mol% of the natamycin concentration.

7. The composition according to any one of claims 1-6, further comprising a polyelectrolyte complex comprising a polyanion selected from a lignin-compound, xanthan gum, humate and alginate, and a polycation selected from chitosan and poly-allylamine, in a relative amount of between 1:2 and 60:1 (w/w).

8. A method for protecting an agricultural plant or plant part, comprising providing a composition according to any one of claims 1-7, and applying said composition to said agricultural plant or plant part.

9. The method of claim 8, wherein the plant part is a seed, bulb, fruit or vegetable.

10. A method for improving the development and/or yield of an agricultural plant, comprising providing a composition according to any one of claims 1-7, and contacting the plant with said composition.

11. A method for protecting a soil and/or a growth substrate, comprising applying to said soil and/or a growth substrate a composition according to any one of claims 1-7.

12. The method according to any one of claims 8-11, whereby said composition is diluted between 10² and 10⁶ times, in an aqueous solution or in oil.

13. Use of a composition according to any one of claims 1-7 for protecting a plant, plant part, soil and/or growth substrate.

## Patentansprüche

1. Antimykotische Zusammensetzung, umfassend Natamycin und eine Fettsäure, ausgewählt aus Palmitinsäure, Ölsäure und Linolsäure, oder ein Salz davon, wobei das Natamycin eine durchschnittliche Teilchengröße von zwischen 0,2 und 10 Mikrometer hat, und wobei alle C4-C22-Fettsäuren oder Salze davon in der Zusammensetzung in einer Konzentration zwischen 1 und 30 Mol-% der Natamycin-Konzentration vorhanden sind.

2. Antimykotische Zusammensetzung nach Anspruch 1, umfassend 1 % bis 98 % (Gew./Gew.) Natamycin, vorzugsweise 6 % bis 60 % (Gew./Gew.) Natamycin.

3. Antimykotische Zusammensetzung nach einem der Ansprüche 1 - 2, umfassend wenigstens zwei Fettsäuren, ausgewählt aus Palmitinsäure, Ölsäure und Linolsäure, oder Salze davon.

4. Zusammensetzung nach einem der Ansprüche 1 - 3, die eine wässrige oder ölige Zusammensetzung ist.

5. Zusammensetzung nach einem der Ansprüche 1 - 4, wobei die Zusammensetzung ferner Proteine als Komponenten von Zellmaterial von einem Natamycin-produzierenden Bakterium umfasst.

6. Zusammensetzung nach einem der Ansprüche 1 - 5, wobei die wenigstens eine Fettsäure oder das Salz davon in einer Konzentration von zwischen 3 und 10 Mol-% der Natamycin-Konzentration vorhanden ist.

7. Zusammensetzung nach einem der Ansprüche 1 - 6, ferner umfassend einen Polyelektrolytkomplex, umfassend ein Polyanion, ausgewählt aus einer Ligninverbindung, Xanthangummi, Humat und Alginat, und ein Polykation, ausgewählt aus Chitosan und Polyallylamin, in einer relativen Menge von zwischen 1:2 und 60:1 (Gew./Gew.).

8. Verfahren zum Schützen einer landwirtschaftlichen Pflanze oder eines landwirtschaftlichen Pflanzenteils, umfassend Bereitstellen einer Zusammensetzung nach einem der Ansprüche 1 - 7, und Applizieren der Zusammensetzung auf die landwirtschaftliche Pflanze oder den landwirtschaftlichen Pflanzenteil.

9. Verfahren nach Anspruch 8, wobei der Pflanzenteil ein Samen, eine Zwiebel, eine Frucht oder ein Gemüse ist.

10. Verfahren zum Verbessern der Entwicklung und/oder des Ertrags einer landwirtschaftlichen Pflanze, umfassend Bereitstellen einer Zusammensetzung nach einem der Ansprüche 1 - 7, und in Kontakt bringen der Pflanze mit der Zusammensetzung.

11. Verfahren zum Schützen eines Bodens und/oder eines Wachstumssubstrats, umfassend Applizieren einer Zusammensetzung nach einem der Ansprüche 1 - 7auf den Boden und/oder ein Wachstumssubstrat.

12. Verfahren nach einem der Ansprüche 8 - 11, wobei die Zusammensetzung zwischen 10² und 10⁶-fach in einer wässrigen Lösung oder in Öl verdünnt wird.

13. Verwendung einer Zusammensetzung nach einem der Ansprüche 1 - 7 zum Schützen einer Pflanze, eines Pflanzenteils, eines Bodens und/oder eines Wachstumssubstrats.

## Revendications

1. Composition antifongique comprenant de la natamycine et un acide gras choisi parmi l'acide palmitique, acide oléique et acide linoléique, ou un sel de ceux-ci, dans laquelle la natamycine présente une taille moyenne de particule de 0,2 à 10 micromètres, et dans laquelle tous les acides gras en C4-C22 ou sels de ceux-ci dans ladite composition sont présents à une concentration de 1 à 30 % en mole de la concentration en natamycine.

2. Composition antifongique selon la revendication 1, comprenant de 1 % à 98 % (masse/masse) de natamycine, de préférence 6 % à 60 % (masse/masse) de natamycine.

3. Composition antifongique selon l'une quelconque des revendications 1-2, comprenant au moins deux acides gras choisis parmi l'acide palmitique, acide oléique et acide linoléique, ou sels de ceux-ci.

4. Composition selon l'une quelconque des revendications 1-3, qui est une composition aqueuse ou huileuse.

5. Composition selon l'une quelconque des revendications 1-4, dans laquelle la composition comprend de plus des protéines comme constituants de matière cellulaire à partir de bactérie produisant de la natamycine.

6. Composition selon l'une quelconque des revendications 1-5, dans laquelle le au moins un acide gras ou sel de celui-ci est présent à une concentration de 3 à 10 % en mole de la concentration en natamycine.

7. Composition selon l'une quelconque des revendications 1-6, comprenant de plus un complexe de polyélectrolyte comprenant un polyanion choisi parmi un composé de lignine, de la gomme xanthane, un humate et alginate, et un polycation choisi parmi le chitosan et une poly-allylamine, dans une quantité relative de 1:2 à 60:1 (masse/masse).

8. Procédé pour la production d'une plante ou une partie de plante agricole, comprenant la fourniture d'une composition selon l'une quelconque des revendications 1-7, et l'application de ladite composition à ladite plante ou partie de plante agricole.

9. Procédé selon la revendication 8, dans lequel la partie de plante est une semence, un bulbe, un fruit ou un légume.

10. Procédé pour l'amélioration du développement et/ou la production d'une plante agricole, comprenant la fourniture d'une composition selon l'une quelconque des revendications 1-7, et la mise en contact de la plante avec ladite composition.

11. Procédé pour la protection d'un sol et/ou d'un substrat de croissance, comprenant l'application audit sol et/ou à un substrat de croissance d'une composition selon l'une quelconque des revendications 1-7.

12. Procédé selon l'une quelconque des revendications 8-11, selon lequel ladite composition est diluée de 10² à 10⁶ fois, dans une solution aqueuse ou dans de l'huile.

13. Utilisation d'une composition selon l'une quelconque des revendications 1-7 pour la protection d'une plante, partie de plante, d'un sol et/ou substrat de croissance.
